(19) Europäisches Patentamt
European Patent Office
Office européen des brevets

(11) EP 4 745 102 A1

(12) EUROPEAN PATENT APPLICATION
published in accordance with Art. 153(4) EPC

(43) Date of publication:
20.05.2026 Bulletin 2026/21

(51) International Patent Classification (IPC):
C03C 10/04 (2006.01)      C03C 21/00 (2006.01)

(21) Application number: 25747884.2

(22) Date of filing: 24.01.2025

(86) International application number:
PCT/CN2025/074946

(87) International publication number:
WO 2025/162316 (07.08.2025 Gazette 2025/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.02.2024 CN 202410156362

(71) Applicant: Chongqing Aureavia Hi-tech Glass
Co., Ltd
Chongqing 400714 (CN)

(72) Inventors:
• ZHOU, Jingpeng
Chongqing 400714 (CN)
• TIAN, Qian
Chongqing 400714 (CN)
• LIU, Zhiqiang
Chongqing 400714 (CN)
• HUANG, Hao
Chongqing 400714 (CN)
• LUO, Feng
Chongqing 400714 (CN)

(74) Representative: Dantz, Dirk
Dantz IP & Law
Kurfürstendamm 43
10719 Berlin (DE)

(54) **GLASS CERAMIC, CHEMICALLY STRENGTHENED GLASS CERAMIC AND USES THEREOF**

(57) The present application relates to the technical field of glass ceramics, and in particular, to a glass ceramic, a chemically strengthened glass ceramic, and uses thereof. The glass ceramic comprises lithium disilicate as a main crystal phase and has specific content ranges of oxides. On the basis of the content expressed as the molar percentage of each oxide in the composition of the glass ceramic, the composition of the glass ceramic satisfies $2.00 \leq SiO_2/Li_2O \leq 2.40$. The glass ceramic of the present application has high intrinsic strength and excellent optical performance, and can be chemically strengthened to obtain a chemically strengthened glass ceramic with high stress level and excellent deformation resistance.

FIG. 4

**Description**

**CROSS-REFERENCE TO RELATED APPLICATIONS**

The present invention claims priority to Chinese Patent Application No. 202410156362.3 filed on February 2, 2024 with the China National Intellectual Property Administration, and entitled "GLASS CERAMIC, CHEMICALLY STRENGTHENED GLASS CERAMIC AND USES THEREOF", the entire contents of which are incorporated herein by reference.

**TECHNICAL FIELD**

The present invention belongs to the technical field of microcrystalline glass (glass ceramic), and specifically relates to microcrystalline glass having excellent deformation resistance, chemically strengthened microcrystalline glass (chemically strengthened glass ceramic) and use thereof.

**BACKGROUND ART**

With the advent of the intelligent era, portable electronic devices such as mobile phones, tablets, and watches have become indispensable parts in daily life, and their damage is mostly screen breakage. With popularization of microcrystalline glass such as "Kunlun glass", "Ceramic Shield" and "Titan Glass", breakage rates of cover glass have been substantially reduced. However, a problem of failure of an inner glass screen still needs to be further addressed, and if the inner screen fails, phenomena such as touch failure, abnormal display, and screen damage are likely to occur. Particularly under the promotion of market demand for large-screen and lightweight thin electronic devices, the cover glass is increasingly thinner, and when the cover glass is deformed by extrusion or impact, the inner glass screen will be extruded, which may cause failure of the inner screen. Therefore, in order to better address the problem of failure of the inner glass screen caused by impact on the cover glass or the like, it is urgent to develop cover glass having excellent deformation resistance.

**SUMMARY**

As a solid material containing a microcrystalline phase and a glass phase, microcrystalline glass has obvious advantages in overall strength performance compared with conventional glass because a large number of nanoscale tiny crystals contained therein can hinder micro-crack propagation. Among microcrystalline glasses, microcrystalline glass having primary crystalline phase lithium disilicate as the cover glass of electronic products has great application potential.

Lithium disilicate ($Li_2Si_2O_5$) crystalline phase is an orthorhombic crystal based on a $[Si_2O_5]$ tetrahedral array, with the crystal being flat or plate-shaped. In interior of microcrystalline glass, lithium disilicate crystals are randomly oriented interlocking microstructures, and force paths of cracks to twist when passing through the crystals, thereby preventing crack propagation, and improving strength and fracture toughness of the microcrystalline glass. Moreover, with a refractive index close to that of glass matrix (e.g., base glass for preparing microcrystalline glass), the lithium disilicate crystals are ideal crystalline phases for preparing high-transparency microcrystalline glass.

In view of this, an objective of the present invention is to provide a microcrystalline glass having high strength and excellent optical properties and having lithium disilicate as a primary crystalline phase, where the microcrystalline glass can be chemically strengthened to prepare chemically strengthened microcrystalline glass having a high stress level, excellent deformation resistance and high mechanical strength.

In order to achieve the above objective, the present invention provides technical solutions as follows.

The present invention provides a microcrystalline glass, where the microcrystalline glass contains a lithium disilicate crystalline phase, where the lithium disilicate crystalline phase has a higher weight percentage than other crystalline phases present in the microcrystalline glass;

in terms of molar percentage of oxides, a composition of the microcrystalline glass includes:

$SiO_2$: 55.00 mol%-65.00 mol%, $Al_2O_3$: 0.00 mol%-2.00 mol%, $P_2O_5$: 1.00 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and

in terms of contents of various oxides represented by molar percentage in the composition of the microcrystalline glass, the composition of the microcrystalline glass satisfies: $2.00 \le SiO_2 / Li_2O \le 2.40$, optionally, $2.00 \le SiO_2 / Li_2O \le 2.30$, and further optionally, $2.02 \le SiO_2 / Li_2O \le 2.20$. By optimizing glass formulations, for example, with a relatively high content of lithium, using a relatively high content of zirconium, a relatively low content of aluminum, etc., at the

**EP 4 745 102 A1**

same time, enabling various constituent components satisfy specific content relationships, and enabling interaction between various constituent components, on one hand, it is beneficial to ensure precipitation of a desired content of the lithium disilicate crystalline phase, and restrict precipitation of other crystalline phases (for example, petalite crystalline phase), thereby helping to ensure to obtain the microcrystalline glass having high intrinsic strength and excellent optical properties and taking lithium disilicate as a primary crystalline phase, and on the other hand, it is conducive to ensuring the microcrystalline glass to satisfy the specific composition and structure, so as to ensure preparation of the chemically strengthened microcrystalline glass having a high stress level and excellent deformation resistance after chemical strengthening.

In some embodiments of the present invention, in terms of contents of various oxides represented by molar percentage in the composition of the microcrystalline glass, the composition of the microcrystalline glass further satisfies:

$0.90 \leq SiO_2 + Li_2O \leq 0.96$, optionally $0.90 \leq SiO_2 + Li_2O \leq 0.95$; and/or
$Al_2O_3 / SiO_2 \leq 0.030$. By adjusting various components to satisfy specific content relationships, it is beneficial to ensure formation of a desired crystalline phase structure, and is also beneficial to improve a stress level generated by the microcrystalline glass after chemical strengthening, thereby helping to ensure the microcrystalline glass to obtain a high mechanical strength performance and excellent deformation resistance.

In some embodiments of the present invention, in terms of contents of various oxides represented by molar percentage in the composition of the microcrystalline glass, the composition of the microcrystalline glass further satisfies:

$0.31 \leq ZrO_2 / (CaO + ZrO_2 + Al_2O_3) \leq 1.50$, optionally, $0.32 \leq ZrO_2 / (CaO + ZrO_2 + Al_2O_3) \leq 1.20$, further optionally, $0.36 \leq ZrO_2 / (CaO + ZrO_2 + Al_2O_3) \leq 1.10$;
and/or
$0.10 \leq ZrO_2 / (100\% - 3 \times Li_2O) \leq 0.60$, optionally, $0.12 \leq ZrO_2 / (100\% - 3 \times Li_2O) \leq 0.52$, further optionally, $0.16 \leq ZrO_2 / (100\% - 3 \times Li_2O) \leq 0.50$;
and/or
$0.034 \leq ZrO_2 / SiO_2 \leq 0.100$, optionally, $0.035 \leq ZrO_2 / SiO_2 \leq 0.095$, further optionally, $0.055 \leq ZrO_2 / SiO_2 \leq 0.095$. By adjusting various components to satisfy specific content relationships, it facilitates exerting an enhancing or toughening effect of various components and interaction between various components, thereby ensuring a high intrinsic strength of the microcrystalline glass and a high stress level thereof after strengthening, and further helping to ensure the microcrystalline glass to obtain a high mechanical strength performance and excellent deformation resistance.

In some embodiments of the present invention, in terms of contents of various oxides represented by molar percentage in the composition of the microcrystalline glass, the composition of the microcrystalline glass further satisfies:

$CaO + Al_2O_3 \leq 0.065$, optionally, $CaO + Al_2O_3 \leq 0.055$, further optionally, $CaO + Al_2O_3 \leq 0.050$;
and/or
$(CaO + Al_2O_3) / Li_2O \leq 0.25$, optionally, $(CaO + Al_2O_3) / Li_2O \leq 0.20$, further optionally, $(CaO + Al_2O_3) / Li_2O \leq 0.14$. By adjusting various components to satisfy specific content relationships, it is beneficial to avoid influence on crystal precipitation of the microcrystalline glass while exerting an enhancing effect and the like of various components, thereby ensuring the microcrystalline glass to realize a desired crystalline phase structure, and further facilitating ensuring the microcrystalline glass to obtain a high mechanical strength performance and excellent deformation resistance.

In some embodiments of the present invention, in terms of contents of various oxides represented by molar percentage in the composition of the microcrystalline glass, the composition of the microcrystalline glass further satisfies:

$0.12 \leq (ZrO_2 - Na_2O) / (SiO_2 - 2 \times Li_2O) \leq 6.40$, optionally, $0.14 \leq (ZrO_2 - Na_2O) / (SiO_2 - 2 \times Li_2O) \leq 6.16$, further optionally, $0.50 \leq (ZrO_2 - Na_2O) / (SiO_2 - 2 \times Li_2O) \leq 3.00$;
and/or
$Na_2O / SiO_2 \leq 0.05$, optionally, $Na_2O / SiO_2 \leq 0.04$, further optionally, $Na_2O / SiO_2 \leq 0.02$. By adjusting various components to satisfy specific content relationships, it is beneficial to better exert effects of various components, enable the microcrystalline glass to obtain high intrinsic strength and excellent optical properties, and also enable the microcrystalline glass to obtain a high stress level and excellent deformation resistance after chemical strengthening.

In some embodiments of the present invention, in terms of molar percentage of oxides, in the microcrystalline glass:

a content of SiO$_2$ is 60.00 mol%-65.00 mol%, and further, the content of SiO$_2$ may be 60.50 mol%-64.00 mol%; and/or a content of Li$_2$O is 28.00 mol%-31.00 mol%, and further, the content of Li$_2$O may be 29.00 mol%-30.50 mol%; and/or a content of ZrO$_2$ is 3.20 mol%-6.00 mol%, and further, the content of ZrO$_2$ may be 4.00 mol%-6.00 mol%; and/or a content of P$_2$O$_5$ is 1.50 mol%-3.00 mol%, and further, the content of P$_2$O$_5$ may be 1.50 mol%-2.50 mol%; and/or a content of Na$_2$O is 0.00 mol%-1.00 mol%, and further, the content of Na$_2$O may be 0.00 mol%-0.50 mol%; and/or a content of CaO is 0.00 mol%-4.00 mol%, and further, the content of CaO may be 0.00 mol%-2.50 mol%. By adjusting the composition of the microcrystalline glass, it is beneficial to enable the microcrystalline glass to obtain a high mechanical strength performance and excellent deformation resistance.

In some embodiments of the present invention, in terms of molar percentage of oxides, the composition of the microcrystalline glass further includes: Y$_2$O$_3$: 0.00 mol%-1.00 mol%, La$_2$O$_3$: 0.00 mol%-1.00 mol%, and Ta$_2$O$_5$: 0.00 mol%-1.00 mol%. Selectively adding an appropriate amount of Y$_2$O$_3$, La$_2$O$_3$ or Ta$_2$O$_5$ helps to increase density of the microcrystalline glass and increase the Young's modulus thereof, but may also increase a refractive index of the microcrystalline glass, and reduce optical properties of the microcrystalline glass.

In some embodiments of the present invention, in terms of molar percentage of oxides, in the microcrystalline glass: a sum of molar percentage contents of Na$_2$O and K$_2$O is smaller than 1.00 mol%.

In some embodiments of the present invention, a density $\rho$ of the microcrystalline glass is $\geq$ 2.50 g/cm$^3$, and optionally, the density $\rho$ of the microcrystalline glass is 2.50 g/cm$^3$-2.75 g/cm$^3$; and/or a refractive index of the microcrystalline glass is $\leq$ 1.60. The microcrystalline glass satisfying the density and/or the refractive index can be ensured to have relatively high intrinsic strength and excellent optical properties.

In some embodiments of the present invention, a crystallinity of the microcrystalline glass is 30.00 wt%-90.00 wt%, optionally, the crystallinity is 50.00 wt%-90.00 wt%, and the crystallinity is 65.00 wt%-90.00 wt%; and/or, in the microcrystalline glass, an average crystal size is $\leq$ 100 nm, optionally, the average crystal size is $\leq$ 50 nm, and further optionally, the average crystal size is 15 nm-45 nm. A relatively high content of crystalline phases is beneficial to improve the mechanical strength performance of the microcrystalline glass. Satisfying a relatively small average crystal size helps to ensure the microcrystalline glass to have excellent optical properties.

In some embodiments of the present invention, the Young's modulus of the microcrystalline glass is $\geq$ 100.00 GPa, optionally, the Young's modulus of the microcrystalline glass is $\geq$ 110.00 GPa, and further optionally, the Young's modulus of the microcrystalline glass is 114 GPa-130 GPa. Having a relatively high Young's modulus indicates that the microcrystalline glass has relatively high intrinsic strength, which is beneficial for it to obtain a relatively high mechanical strength performance and excellent deformation resistance.

In some embodiments of the present invention, when the microcrystalline glass has a thickness of 0.5 mm, b value of the microcrystalline glass is $\leq$ 1.0, and optionally, b value may be $\leq$ 0.8; and/or the microcrystalline glass is transparent in the visible light range; when the microcrystalline glass has a thickness of 0.5 mm, for light with a wavelength of 550 nm, a transmittance of the microcrystalline glass is $\geq$ 85.00%, and optionally, the transmittance of the microcrystalline glass is $\geq$ 90.00%. The microcrystalline glass satisfying the optical b value and/or the transmittance can be ensured to have relatively excellent optical properties and display effect, and is suitable for use in display screens requiring high display effect.

In some embodiments of the present invention, an expansion softening point of the microcrystalline glass is 750 °C-850 °C, and optionally, the expansion softening point of the microcrystalline glass is 750 °C-830 °C. An appropriate expansion softening point facilitates 3D hot bending forming of the microcrystalline glass, so as to produce 3D curved microcrystalline glass with a high strength performance.

The present invention further provides a chemically strengthened microcrystalline glass, where a composition at a center of the chemically strengthened microcrystalline glass is identical to that of the preceding microcrystalline glass, and the chemically strengthened microcrystalline glass includes a compression stress layer region extending from a surface of the chemically strengthened microcrystalline glass to a compression depth, and has tensile stress in an interior of the chemically strengthened microcrystalline glass.

In some embodiments of the present invention, the chemically strengthened microcrystalline glass includes a lithium disilicate crystalline phase, where the lithium disilicate crystalline phase has a higher weight percentage than other crystalline phases present in the chemically strengthened microcrystalline glass. In terms of molar percentage of oxides, the composition at the center of the chemically strengthened microcrystalline glass includes: SiO$_2$: 55.00 mol%-65.00 mol%, Al$_2$O$_3$: 0.00 mol%-2.00 mol%, P$_2$O$_5$: 1.00 mol%-3.00 mol%, ZrO$_2$: 2.00 mol%-6.00 mol%, MgO: 0.00 mol%-2.00 mol%, ZnO: 0.00 mol%-2.00 mol%, Na$_2$O: 0.00 mol%-3.00 mol%, K$_2$O: 0.00 mol%-1.00 mol%, Li$_2$O: 27.00 mol%-32.00 mol%, CaO: 0.00 mol%-5.00 mol%, B$_2$O$_3$: 0.00 mol%-1.00 mol%, and SrO: 0.00 mol%-2.00 mol%; and in terms of contents of oxides expressed by molar percentage, the composition at the center of the chemically strengthened microcrystalline glass satisfies: $2.00 \leq SiO_2 / Li_2O \leq 2.40$, optionally, $2.00 \leq SiO_2 / Li_2O \leq 2.30$, and further optionally, $2.02 \leq SiO_2 / Li_2O \leq 2.20$.

In some embodiments of the present invention, in terms of contents of oxides expressed by molar percentage, the composition at the center of the chemically strengthened microcrystalline glass further satisfies:

$0.90 \leq SiO_2 + Li_2O \leq 0.96$; and/or
$Al_2O_3 / SiO_2 \leq 0.030$; and/or
$0.31 \leq ZrO_2 / (CaO + ZrO_2 + Al_2O_3) \leq 1.50$; and/or
$0.10 \leq ZrO_2 / (100\% - 3 \times Li_2O) \leq 0.60$; and/or
$0.034 \leq ZrO_2 / SiO_2 \leq 0.100$; and/or
$CaO + Al_2O_3 \leq 0.065$; and/or
$(CaO + Al_2O_3) / Li_2O \leq 0.25$; and/or
$0.12 \leq (ZrO_2 - Na_2O) / (SiO_2 - 2 \times Li_2O) \leq 6.40$; and/or
$Na_2O / SiO_2 \leq 0.05$.

In some embodiments of the present invention, in terms of molar percentage of oxides, the composition at the center of the chemically strengthened microcrystalline glass includes:
a content of $SiO_2$ is 60.00 mol%-65.00 mol%, further, the content of $SiO_2$ may be 60.50 mol%-64.00 mol%; and/or a content of $Li_2O$ is 28.00 mol%-31.00 mol%, further, the content of $Li_2O$ may be 29.00 mol%-30.50 mol%; and/or a content of $ZrO_2$ is 3.20 mol%-6.00 mol%, further, the content of $ZrO_2$ may be 4.00 mol%-6.00 mol%; and/or a content of $P_2O_5$ is 1.50 mol%-3.00 mol%, further, the content of $P_2O_5$ may be 1.50 mol%-2.50 mol%; and/or a content of $Na_2O$ is 0.00 mol%-1.00 mol%, further, the content of $Na_2O$ may be 0.00 mol%-0.50 mol%; and/or a content of $CaO$ is 0.00 mol%-4.00 mol%, further, the content of $CaO$ may be 0.00 mol%-2.50 mol%.

In some embodiments of the present invention, in terms of molar percentage of oxides, the composition at the center of the chemically strengthened microcrystalline glass further includes: $Y_2O_3$: 0.00 mol%-1.00 mol%, $La_2O_3$: 0.00 mol%-1.00 mol%, and $Ta_2O_5$: 0.00 mol%-1.00 mol%.

In some embodiments of the present invention, the chemically strengthened microcrystalline glass has DOL_0 of 0.18 t-0.25 t, and optionally, the chemically strengthened microcrystalline glass has DOL_0 of 0.20 t-0.25 t, where DOL_0 is depth of a compression stress layer, and t is thickness of the chemically strengthened microcrystalline glass. DOL_0 of the chemically strengthened microcrystalline glass being in the above ranges indicates that the chemically strengthened microcrystalline glass has a large depth of the compressive stress layer, which is more beneficial for it to offset energy driving crack propagation, thereby ensuring it to have excellent damage resistance and excellent deformation resistance.

In some embodiments of the present invention, the chemically strengthened microcrystalline glass has |CT_AV| of 85 MPa-200 MPa, optionally, the chemically strengthened microcrystalline glass has |CT_AV| of 90 MPa-200 MPa, and further optionally, the chemically strengthened microcrystalline glass has |CT_AV| of 130 MPa-200 MPa, where |CT_AV| is an absolute value of average tensile stress. |CT_AV| of the chemically strengthened microcrystalline glass being in the above ranges indicates that the chemically strengthened microcrystalline glass has a relatively high tensile stress level, reflecting that it has a relatively high surface stress level, and the relatively high surface compressive stress level can offset more remaining energy of drop and collision, further ensuring it to have excellent damage resistance and excellent deformation resistance.

In some embodiments of the present invention, the chemically strengthened microcrystalline glass has CT_LD of 50,000 MPa/mm-100,000 MPa/mm, optionally, the chemically strengthened microcrystalline glass has CT_LD of 55,000 MPa/mm-100,000 MPa/mm; and further optionally, the chemically strengthened microcrystalline glass has CT_LD of 65,000 MPa/mm-100,000 MPa/mm, where CT_LD is tensile stress linear density. CT_LD of the chemically strengthened microcrystalline glass being in the above ranges indicates that the tensile stress stored inside the chemically strengthened microcrystalline glass is relatively dense, demonstrating that the chemically strengthened microcrystalline glass has a relatively high surface stress level, further ensuring it to have excellent damage resistance and excellent deformation resistance.

In some embodiments of the present invention, the chemically strengthened microcrystalline glass has |CT_CV| of 120 MPa-320 MPa, optionally, the chemically strengthened microcrystalline glass has |CT_CV| of 135 MPa-300 MPa, and further optionally, the chemically strengthened microcrystalline glass has |CT_CV| of 160 MPa-300 MPa. |CT_CV| of the chemically strengthened microcrystalline glass being in the above ranges indicates that the chemically strengthened microcrystalline glass has a relatively high tensile stress level, reflecting that it has a relatively high surface stress level, and the relatively high surface compressive stress level can offset more remaining energy of drop and collision, further ensuring it to have excellent damage resistance and excellent deformation resistance.

In some embodiments of the present invention, Vickers hardness of the chemically strengthened microcrystalline glass is greater than or equal to 680 kgf/mm$^2$, and optionally, the Vickers hardness of the chemically strengthened microcrystalline glass is 700 kgf/mm$^2$-800 kgf/mm$^2$. The Vickers hardness of the chemically strengthened microcrystalline glass being in the above range indicates that the chemically strengthened microcrystalline glass has high hardness, further ensuring it to have an excellent mechanical performance.

In some embodiments of the present invention, when the thickness of the chemically strengthened microcrystalline glass is 0.5 mm, a center of a main surface of the chemically strengthened microcrystalline glass is extruded by a round-head metal compression rod with a diameter of 10 mm. When the center of the main surface of the chemically strengthened microcrystalline glass is extruded by a load of 10 kgf, a deformation amount of a loaded position of the chemically strengthened microcrystalline glass to a loading direction is ≤ 0.850 mm. Upon extrusion on the chemically strengthened microcrystalline glass, a smaller deformation amount generated indicates more excellent deformation resistance thereof, and upon extrusion or impact when it is used as cover glass of a display screen, the deformation is smaller, and the probability of contact with an inner glass screen also becomes smaller, which is beneficial to address the problem of failure of the inner glass screen caused by the impact on the cover glass.

In some embodiments of the present invention, when the thickness of the chemically strengthened microcrystalline glass is 0.5 mm, a center of a main surface of the chemically strengthened microcrystalline glass is extruded by a round-head metal compression rod with a diameter of 10 mm. When the center of the main surface of the chemically strengthened microcrystalline glass has a deformation amount of 0.400 mm in a loading direction, the load borne by the center of the main surface of the chemically strengthened microcrystalline glass is ≥ 30 N. When a certain deformation amount occurs, if the chemically strengthened microcrystalline glass can bear a larger load, when the chemically strengthened microcrystalline glass is subjected to extrusion or impact, the deformation generated thereby can offset a larger load , and thus when it is deformed and comes into contact with the inner glass screen, the inner glass screen is subjected to a smaller extrusion or impact load, and the possibility of failure of the inner glass screen will be reduced. Using the chemically strengthened microcrystalline glass capable of bearing or offsetting a relatively large load as the cover glass facilitates addressing the problem of failure of the inner glass screen caused by the impact or extrusion on the cover glass.

The present invention provides a glass device, where the glass device contains the preceding microcrystalline glass or contains the preceding chemically strengthened microcrystalline glass.

The present invention further provides an electronic device, where the electronic device includes the preceding microcrystalline glass or includes the preceding chemically strengthened microcrystalline glass.

Beneficial Effects are as follows.

By enabling the microcrystalline glass containing the primary crystalline phase lithium disilicate to satisfy the specific composition and structure, particularly to satisfy specific oxide contents and specific oxide content relationships, the present invention not only ensures the microcrystalline glass to have high intrinsic strength and excellent optical properties, but also ensures to prepare the chemically strengthened microcrystalline glass having a high stress level (e.g., having high CT_LD, |CT_AV|, and DOL_0) and excellent deformation resistance by chemically strengthening the microcrystalline glass. By using the chemically strengthened microcrystalline glass prepared from the microcrystalline glass of the present invention as cover glass of a display screen of an electronic device, the problem of failure of an inner glass screen due to deformation and extrusion of the cover glass in the prior art can be well overcome.

**BRIEF DESCRIPTION OF THE DRAWINGS**

In order to more clearly illustrate technical solutions of embodiments of the present invention, drawings which need to be used in the embodiments will be briefly introduced below. It should be understood that the drawings merely show some embodiments of the present invention, and thus should not be considered as limitation to the scope. Those ordinarily skilled in the art still could obtain other relevant drawings according to these drawings, without using any inventive efforts.

FIG. 1 is a DSC plot of base glass of Example 3.
FIG. 2 is an XRD pattern of microcrystalline glass of Example 3.
FIG. 3 is a curve graph of transmittance of the microcrystalline glass of Example 3.
FIG. 4 is a load-deformation curve graph of chemically strengthened microcrystalline glass of Example 3.
FIG. 5 is a load-deformation curve graph of chemically strengthened microcrystalline glass of Comparative Example 3.

**DETAILED DESCRIPTION OF EMBODIMENTS**

Endpoints and any value of ranges disclosed herein are not limited to precise ranges or values, and these ranges or values should be understood as encompassing values close to these ranges or values. For numerical ranges, endpoint values of various ranges can be combined with each other, endpoint values of various ranges and individual point values can be combined with each other, and individual point values can be combined with each other to obtain one or more new numerical ranges, which numerical ranges should be construed as being specifically disclosed herein. Herein, the terms "optional" and "optionally" both mean possibly including or not (or possibly being present or possibly being not present).

**Definitions of Terms and Testing Methods:**

Base glass refers to glass which has not been subjected to nucleation treatment, crystallization treatment or strengthening treatment, or is also known as base glass.

Microcrystalline glass is also known as glass-ceramic, and is a solid composite material containing both a glass phase and a crystal phase (or also known as microcrystalline phase, crystallization phase) prepared by targeted controlled crystallization of base glass.

Chemically strengthened microcrystalline glass refers to a solid composite material obtained after microcrystalline glass undergoes a chemical strengthening treatment. During a high-temperature chemical strengthening treatment, alkali metal ions with a larger ionic radius (such as potassium ions or sodium ions) in a molten salt bath will replace alkali metal ions with a smaller ionic radius (such as sodium ions or lithium ions) in the microcrystalline glass, thereby generating an ion exchange volume difference and generating compressive stress (or also known as compression stress) on a surface of the microcrystalline glass.

Primary crystalline phase or main crystalline phase refers to a crystalline phase having a higher weight content than other crystalline phases present in microcrystalline glass.

Main surface refers to a surface with the largest surface area in a glass brick or a glass sheet, such as an upper surface or a lower surface of cover glass.

Crystallinity refers to a percentage of a total mass of crystalline phases or crystals in microcrystalline glass relative to a mass of the microcrystalline glass, or is also known as a total crystalline phase content in the microcrystalline glass.

Refractive index refers to a ratio of the propagation velocity of light in vacuum to that of light in this medium.

Transmittance: light of a certain wavelength irradiated onto a glass surface will be reflected, absorbed and transmitted, where a ratio of intensity of a transmitted part to intensity of incident light is transmittance.

SOC refers to photoelastic coefficient. Photoelasticity mainly refers to that a birefringence phenomenon occurs due to anisotropy after a transparent material is stressed. Through the photoelastic coefficient and birefringence measurement, a value of residual stress (in unit of MPa) inside the material can be obtained.

CT_LD refers to tensile stress linear density, in unit of MPa/mm. It should be understood that when the microcrystalline glass is subjected to ion exchange in a molten salt bath, a compression stress layer (or also known as a compressive stress layer) will be formed on a surface of the microcrystalline glass, and a tensile stress layer (or also known as a tension stress layer) will be formed inside the microcrystalline glass. Exemplarily, during chemical strengthening, ion exchange is performed between alkali metal ions with a larger radius in the molten salt bath and alkali metal ions with a smaller radius in the microcrystalline glass, thereby forming the compression stress layer on the surface of the microcrystalline glass, and forming the tensile stress layer in the interior of the microcrystalline glass. In the present invention, CT_LD is calculated through the following equation:

$$\mathrm{CT\_LD} = |\mathrm{CT\_AV}| \times \frac{(1000 \times t - 2 \times \mathrm{DOL\_0})}{t}$$

Herein, t is thickness of the chemically strengthened microcrystalline glass, in unit of mm; DOL_0 is depth of the compression stress layer of the chemically strengthened microcrystalline glass, in unit of $\mu$m; and |CT_AV| is an absolute value of an average tensile stress of the chemically strengthened microcrystalline glass, in unit of MPa. It should be understood that in the calculation equation of the tensile stress linear density, data are put according to the above unit requirements to perform calculation, and a calculation result is obtained, where the units themselves are not involved in the calculation.

|CT_CV| refers to an absolute value of a maximum tensile stress, in unit of MPa, specifically referring to an absolute value of a maximum value of all tensile stresses in the tensile stress layer, tested by the SLP-2000 stressmeter.

|CT_AV| refers to an absolute value of the average tensile stress, in unit of MPa, and specifically refers to an absolute value of an average value of all tensile stress in the tensile stress layer, tested by the SLP-2000 stressmeter.

DOL_0 refers to the depth of the compression stress layer, or is known as depth of the compressive stress layer, and specifically refers to a distance from any main surface of chemically strengthened microcrystalline glass to a position near the surface where the compressive stress is zero, tested by the SLP-2000 stressmeter.

The b value is used to characterize the yellowness-blueness value of the material. In the present invention, the optical b-value refers to the transmitted light b value, wherein a positive optical b value indicates a bluish tint in the material.

Vickers hardness refers to a standard proposed by Robert L. Smith and George E. Sandland from Vickers Ltd. in 1921 from the UK to represent the hardness of materials.

Upper limit temperature of crystal precipitation refers to the highest temperature at which base glass undergoes crystal precipitation, and above this temperature, the base glass will not precipitate crystals.

Thickness of glass is measured by a micrometer. It should be understood that in a thickness direction, a degree of ion exchange gradually varies from a surface to a center, while an overall exchange capacity increment (mass) of Na-K and/or Li-Na generally is not more than 1.5% of a total mass of a sample. Thus, an expansion effect in the thickness direction is extremely slight, and it can be approximately considered as that the thickness is substantially unchanged. That is, before and after chemical strengthening, the thickness of the microcrystalline glass has little and negligible change.

Measurement of size specification of glass sheet is tested by a quadratic measuring instrument (instrument model is Miyu MY-YXCL-4030).

XRD test: the microcrystalline glass or the chemically strengthened microcrystalline glass of the present invention is pulverized and ground into a sample with a particle size less than 75 $\mu$m, and the sample obtained from the grinding is tested using an X-ray diffractometer, so as to obtain an XRD diffraction peak curve and XRD diffraction data. X-ray diffractometer used in the present invention is Shimadzu XRD-6100, $2\theta = 10°$-$60°$, a scanning speed is 0.2°/min, an operating voltage is 40 kV, and an operating current is 30 mA.

Determination of crystalline phases: XRD diffraction data are analyzed using Jade software (JADE Standard 8.6), so as to determine composition of the crystalline phases in a sample.

Determination of crystallinity: test result (RAW format) of XRD is imported into X-ray diffraction data Rietveld refinement software Jade for fitting and calculation, so as to determine the crystallinity of the sample. Specifically, a ratio of the fitted crystalline phase peak area to a total fitted peak area is the crystallinity of the sample.

Determination of average crystal size: using result data obtained from XRD test, the average crystal size of the sample can be calculated according to Scherrer equation $D = K\lambda / (\beta\cos\theta)$. Herein, $\lambda$ is an X-ray wavelength, $\lambda = 0.154056$ nm, $\beta$ is full width at half maximum of the diffraction peak, $K = 0.89$, and $\theta$ is a Bragg diffraction angle. Specifically, the RAW-format file output from XRD instrument is curve-fitted in Jade software, and a fitting report is output by Jade. Based on the angle $2\theta$ value and Peak FWHM value corresponding to each diffraction peak in the fitting report, the Peak FWHM value is converted to the radian system: $\beta = (\text{FWHM} / 180 \times 3.14)$, and through the Scherrer equation $D = K\lambda / (\beta\cos\theta)$, the crystal size of each diffraction peak is calculated and then averaged, so as to obtain the average crystal size of the sample.

Testing of transmittance and optical b value: the transmittance and optical b value of the microcrystalline glass of the present invention are tested using a haze meter with reference to the national standard *"GB/T 7962.12-2010 Test methods of colorless optical glass - Part 12: Spectral internal transmittance"*. Specifically, the haze meter is utilized to test the transmittance and optical b value of five pieces of microcrystalline glass in the same batch at light with different wavelengths. Average value of optical b values measured for the five pieces of microcrystalline glass is taken as a result of the optical b value of the microcrystalline glass. An average value of the transmittance measured for the five pieces of microcrystalline glass at light with a wavelength of 550 nm is taken as a transmittance result of the microcrystalline glass at light with the wavelength of 550 nm. Herein, the haze meter used for testing in the present invention is a spectrophotometer CM-3600A from Japanese Konica Minolta, a light receiving optical system is transmission, a spectroscopic method is plane reflective grating, a wavelength range is 360 nm-740 nm, a wavelength spacing is 10 nm, an lighting source is pulsed xenon lamp $\times$4, and the instrument is placed with an ambient temperature of 24 °C, and air humidity of 40%.

Density: in the present invention, density of the microcrystalline glass is measured using electronic density balance SD-200L from ALFA MIRAGE, Japan.

Refractive index: in the present invention, a WYA-2WAJ model Abbe refractometer is used for measuring the refractive index of the microcrystalline glass.

Expansion softening point temperature: the sample is made into a cylinder with a diameter of 5.5 mm and a length of 20 mm. A thermal dilatometer LINSEIS L75VD1000 is used for testing the sample. A test curve of thermal expansion coefficient is output for testing. When the curve starts to descend with the increase of temperature, a temperature corresponding to a starting point of the curve experiencing a descending trend is recorded as the expansion softening point temperature of the sample.

Young's modulus: the Young's modulus of the microcrystalline glass is measured by a UMS-100 ultrasonic material characterization system via acoustic wave.

Upper limit temperature of crystal precipitation: base glass is crushed into small pieces, then put into an elongated quartz tank and completely filled. A temperature range is set for a gradient furnace of model JKZC-XJY01, for example, a temperature range of 1050 °C-1225 °C, and at least six temperature measurement points are taken from each temperature range in a descending order of temperature. When the gradient furnace reaches a pre-set temperature range, the elongated quartz tank with the samples placed therein is placed into the gradient furnace, making six temperature measurement points respectively corresponding to glass samples at six positions in the elongated quartz tank. After the elongated quartz tank has been held at constant temperature in the gradient furnace for 60-70 min, the elongated quartz tank is taken out. A microscope or a magnifying lens is used for observing situation of glass samples at different positions in the elongated quartz tank. If a glass sample is devitrified and fogged, the glass sample at that place is determined as precipitating crystals; if a glass sample is transparent, the glass sample at that place is determined as not precipitating crystals. A range of the upper limit temperature of crystal precipitation is between a temperature measurement point corresponding to the transparent sample and a temperature measurement point corresponding to an adjacent devitrified or fogged sample, and an average value of the two temperature measurement points is recorded as the upper limit temperature of crystal precipitation. If all or none of the glass samples in the elongated quartz tank precipitate crystals in the temperature range set for the gradient furnace, the temperature range of the gradient furnace is reset, to measure the upper limit temperature of crystal precipitation of the glass samples.

Test of Vickers hardness: the chemically strengthened microcrystalline glass is fabricated into small pieces with length, width and thickness of 50 mm × 50 mm × 0.5 mm, glass sample sheets with a clean surface and without damages visible to naked eyes, such as scratches, pits and cracks are selected as test specimens, and then the Vickers hardness thereof is measured using a Vickers hardness tester. The Vickers hardness tester used for testing in the present invention is a digital display small-load Vickers hardness tester with model VTD405 from Beijing Kewei Technology Co., Ltd. Testing conditions are as follows: a load of 300 gf, a loading duration of 10 s, and validity of indentation complying with the standard in *GB/T 37900-2019 Test method of hardness and fracture toughness for ultra-thin glass-Low-load Vickers hardness indentation method.* Three different positions are selected from a surface of the same test specimen for measurement, and an average of three measurement results is recorded as a result of the Vickers hardness of the test specimen.

Synchronous thermal analysis test: base glass is pulverized, ground and sieved through a 200-mesh screen to obtain a sample. Then the sample about 20 mg is weighed, and heated from room temperature to 1,100 °C at a heating rate of 10 °C/min under a protective atmosphere of nitrogen by using a differential thermal analyzer, so as to obtain a DSC test plot of the sample. The differential thermal analyzer used in the present invention is Mettler-Toledo TGA/DSC3+ thermogravimetric and synchronous thermal analyzer. A standard material used for the test is $\alpha$-$Al_2O_3$ powder. A container for placing the sample is a platinum crucible. Instrument is placed with an ambient temperature of 24 °C, and air humidity of 40% or less.

Stress test: in the present invention, |CT_CV|, DOL_0, and |CT_AV| of the chemically strengthened microcrystalline glass are tested using the SLP 2000 stressmeter. Relevant parameters of the stressmeter are set as follows: a light source wavelength is 518 nm, SOC (photoelastic coefficient) is set to be 25.5, a refractive index is set according to a refractive index value of a sample to be tested, and exposure duration is 300 $\mu$sec. Then, a value of the tensile stress linear density (CT_LD) of the chemically strengthened microcrystalline glass is calculated through the preceding calculation equation of the tensile stress linear density.

Testing of deformation amount: the test is conducted using a single-strength testing method. Specifically, the chemically strengthened microcrystalline glass is placed on a base ring of a tensile testing machine (LT_850A), and a round-head part of the compression rod is enabled to come into contact with the center of the main surface of the chemically strengthened microcrystalline glass. A moving speed of the compression rod is set to be 50 mm/min. Test software is initiated, and the test is started by clicking. A plot of applied load and corresponding deformation amount is recorded by means of the test software. The deformation amount of the chemically strengthened microcrystalline glass when the load is 10 kgf is read. The deformation amount herein refers to displacement of a loaded point position of the main surface of the chemically strengthened microcrystalline glass to a loading direction. The compression rod used in this test method is a metal compression rod with a diameter of 10 mm, and the round head of the compression rod is a hemisphere with a diameter of 10 mm.

Test of load borne when a certain deformation amount occurs: the "load borne" herein refers to a load that needs to be applied to a loaded point position when a corresponding deformation amount occurs on the main surface of the chemically strengthened microcrystalline glass along a loading direction.

The "load borne" is tested by the same method as that for testing the deformation amount, i.e., tested by the single-strength testing method. Specifically, the chemically strengthened microcrystalline glass is placed on the base ring of the tensile testing machine (LT_850A), and the round-head part of the compression rod is enabled to come into contact with the center of the main surface of the chemically strengthened microcrystalline glass. The moving speed of the compression rod is set to be 50 mm/min. Test software is initiated, and the test is started by clicking. A plot of an applied load and a corresponding deformation amount is recoded via the test software. The load that needs to be applied when the deformation amount of the chemically strengthened microcrystalline glass sample is 0.40 mm is read, and recorded as the "load borne" (or also referred to as load offset during deformation) at the center of the main surface of the chemically strengthened microcrystalline glass when the deformation amount is 0.40 mm. The compression rod adopted in this test method is the metal compression rod with a diameter of 10 mm, and the round head of the compression rod is a hemisphere with a diameter of 10 mm.

Without being bound to any theory, it is presumed that a deformation process of the glass is actually a process of counteracting stress. When the cover glass is subjected to a force and deformed to a certain degree, the bigger the stress counteracted is, the smaller the force transmitted to the inner glass screen will be under the same impact, that is, the lower the pressure borne by the inner glass screen is, which helps to avoid the problem of failure of the inner glass screen. Likewise, when the cover glass is subjected to a certain force, the smaller the generated deformation amount is, the more difficult it is to be extruded to the inner glass screen, and further, the more difficult it is to cause the problem of failure of the inner glass screen.

In view of this, the present invention provides microcrystalline glass having high mechanical strength, excellent optical properties and excellent deformation resistance and a primary crystalline phase lithium disilicate, chemically strengthened microcrystalline glass and use thereof. The microcrystalline glass provided by the present invention can be chemically strengthened to obtain the chemically strengthened microcrystalline glass having a high stress level.

As in the above, some embodiments of the present invention provide a microcrystalline glass, where the microcrystalline glass contains a lithium disilicate crystalline phase, where the lithium disilicate crystalline phase has a higher weight percentage than other crystalline phases present in the microcrystalline glass; and in terms of molar percentage of oxides, a composition of the microcrystalline glass includes:

$SiO_2$: 55.00 mol%-65.00 mol%, $Al_2O_3$: 0.00 mol%-2.00 mol%, $P_2O_5$: 1.00 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and

in terms of contents of various oxides represented by molar percentage in the composition of the microcrystalline glass, the composition of the microcrystalline glass satisfies: $2.00 \leq SiO_2 / Li_2O \leq 2.40$.

In the present invention, by optimizing glass formulations, for example, with a relatively high content of lithium, using a relatively high content of zirconium, a relatively low content of aluminum, etc., at the same time, making various constituent components satisfy the specific content relationships, and enabling interaction between various constituent components, on one hand, it is beneficial to ensure precipitation of a desired content of the lithium disilicate crystalline phase, and restrict precipitation of other crystalline phases (for example, petalite crystalline phase), thereby helping to ensure to obtain the microcrystalline glass having high intrinsic strength and excellent optical properties and taking lithium disilicate as a primary crystalline phase, and on the other hand, it is conducive to ensuring the microcrystalline glass to satisfy the specific composition and structure, so as to ensure that it can be chemically strengthened to prepare the chemically strengthened microcrystalline glass having a high stress level and excellent deformation resistance.

In some embodiments, in terms of molar percentage of oxides, in the microcrystalline glass, a value of $SiO_2/Li_2O$ may be, for example, 2.00, 2.01, 2.02, 2.05, 2.06, 2.07, 2.08, 2.09, 2.10, 2.11, 2.12, 2.13, 2.14, 2.15, 2.16, 2.17, 2.18, 2.19, 2.20, 2.25, 2.30 or 2.40, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained. By employing the composition satisfying this relational equation, it is beneficial to reduce a crystal size in the microcrystalline glass and improve the optical properties of the microcrystalline glass; at the same time, it is beneficial to ensure precipitation of the primary crystalline phase lithium disilicate crystals, effectively reduce precipitation of other crystalline phases (for example, petalite crystals), ensure the microcrystalline glass to obtain relatively high intrinsic strength, and enable the microcrystalline glass to obtain a high stress level after chemical strengthening.

In the present invention, $SiO_2$, as a glass-network-forming oxide, is an indispensable component in constructing a glass network structure. Moreover, $SiO_2$ is also indispensable as a major constituent part of the lithium disilicate ($Li_2Si_2O_5$) crystalline phase. Appropriately increasing the content of $SiO_2$ can increase structural stability and mechanical strength of the glass, and also ensure precipitation of a desired content of the lithium disilicate crystalline phase. However, excessive $SiO_2$ may increase viscosity of the base glass, making it more difficult to melt the glass, thereby reducing moldability of the base glass. Therefore, in order to ensure relatively good forming and crystallization effects, the molar percentage of $SiO_2$ is controlled at 55.00 mol%-65.00 mol%, and optionally, the molar percentage of $SiO_2$ is 60.00 mol%-65.00 mol%.

In some embodiments, the microcrystalline glass may contain 55.00 mol%-65.00 mol%, 58.00 mol%-64.00mol%, 60.00 mol%-65.00 mol%, 61.00 mol%-64.00mol%, 60.50 mol%-64.00 mol%, 61.50 mol%-63.50 mol%, 62.00 mol%-64.00 mol%, 63.00 mol%-64.00 mol% or 63.00 mol%-65.00 mol% of $SiO_2$. In some embodiments, the microcrystalline glass may contain 55.00 mol%, 56.00 mol%, 57.00 mol%, 58.00mol%, 59.00 mol%, 60.00 mol%, 61.00 mol%, 62.00 mol%, 63.00 mol%, 64.00 mol%, 62.55 mol%, 62.58 mol%, 61.82 mol%, 61.72 mol%, 61.87 mol%, 61.76 mol%, 62.59 mol%, 61.15 mol%, 61.25 mol%, 61.06 mol%, 63.17 mol%, 62.77 mol%, 63.39 mol%, 63.17 mol%, 63.16 mol%, 62.01 mol% or 65.00 mol% of $SiO_2$, or may contain $SiO_2$ in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, $Al_2O_3$ is an optional component, and adding an appropriate amount of $Al_2O_3$ is beneficial to stabilize a glass network structure, and is also conducive to promoting ion exchange in the chemical strengthening process to a certain extent. However, excessive $Al_2O_3$ will increase glass viscosity, and tend to precipitate other crystalline phases, such as petalite, and reduce the content of the lithium disilicate crystalline phase, thus affecting an interlocking structure of lithium disilicate. Therefore, the molar percentage of $Al_2O_3$ is controlled at 0.00 mol%-2.00 mol%.

In some embodiments, the microcrystalline glass may contain 0.00 mol%-2.00 mol%, 0.00 mol%-1.60 mol%, 0.00 mol%-1.00 mol%, 0.50 mol%-1.60 mol%, 0.50 mol%-1.00 mol%, 0.00 mol%-0.50 mol%, 1.20 mol%-1.60 mol%, 0.00 mol%-1.30 mol%, 0.00mol%-1.20 mol% or 1.00 mol%-2.00 mol% of $Al_2O_3$. In some embodiments, the microcrystalline glass may contain 0.00 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.80 mol%, 1.55 mol%, 1.38 mol%, 1.41 mol%, 1.37 mol%, 1.39 mol%, 1.43 mol%, 1.23 mol%, 1.42 mol% or 2.00 mol% of $Al_2O_3$, or may contain $Al_2O_3$ in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, $P_2O_5$, as a nucleating agent, is an indispensable component, and both too low and too high contents thereof will lead to a poor crystallization effect, and affect optical properties of the obtained microcrystalline glass, for example, reducing transparency of the microcrystalline glass. Therefore, the molar percentage of $P_2O_5$ is controlled at 1.00 mol%-3.00 mol%, optionally, 1.50 mol%-2.50 mol%.

In some embodiments, the microcrystalline glass may contain 1.00 mol%-3.00 mol%, 1.50 mol%-3.00 mol%, 1.60 mol%-2.80 mol%, 1.50 mol%-2.50 mol%, 1.60 mol%-2.10 mol%, 1.70 mol%-2.20 mol%, 1.50 mol%-1.60 mol%, 1.70 mol%-3.00 mol%, 1.60 mol%-2.50 mol%, 1.70 mol%-2.30 mol%, 1.80 mol%-2.00 mol%, 2.00 mol%-3.00 mol%, 1.80 mol%-1.90 mol%, 1.60 mol%-1.90 mol%, 1.70 mol%-1.90 mol%, 1.75 mol%-1.95 mol% or 1.50 mol%-2.00 mol% of $P_2O_5$. In some embodiments, the microcrystalline glass may contain 1.00 mol%, 1.20 mol%, 1.50 mol%, 1.70 mol%, 1.75 mol%, 1.80mol%, 1.85 mol%, 1.95 mol%, 2.00 mol%, 2.10 mol%, 2.20 mol%, 2.30 mol%, 2.40 mol%, 2.50 mol%, 2.60 mol%, 2.80 mol%, 2.06 mol%, 1.87 mol%, 1.88 mol%, 1.86 mol%, 1.83 mol%, 1.89 mol%, 1.74 mol%, 1.51 mol% or 3.00 mol% of $P_2O_5$, or may contain $P_2O_5$ in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, $ZrO_2$ is an intermediate oxide in glass formation, mainly used as a nucleating agent and a toughening agent, and has functions of reducing a grain size and increasing toughness of the microcrystalline glass. However, a too high content thereof will increase melting difficulty of the base glass, for example, causing appearance of a large amount of white precipitates in the base glass, which is not conducive to obtaining the microcrystalline glass with excellent optical properties. Therefore, the molar percentage of $ZrO_2$ is controlled at 2.00 mol%-6.00 mol%, optionally, 3.20 mol%-6.00 mol%.

In some embodiments, the microcrystalline glass may contain 2.00 mol%-6.00 mol%, 2.30 mol%-5.80 mol%, 2.50 mol%-5.50 mol%, 2.80 mol%-5.30 mol%, 2.90 mol%-5.10 mol%, 3.00 mol%-5.50 mol%, 3.10 mol%-4.80 mol%, 4.80 mol%-6.00 mol%, 4.00 mol%-6.00 mol%, 3.20 mol%-5.30 mol%, 3.50 mol%-5.00 mol%, 3.50 mol%-5.80 mol%, 4.00 mol%-5.00 mol% or 3.20 mol%-6.00 mol% of $ZrO_2$. In some embodiments, the microcrystalline glass may contain 2.00 mol%, 2.30 mol%, 2.50 mol%, 2.70 mol%, 2.90 mol%, 3.00 mol%, 3.10 mol%, 3.30 mol%, 3.50 mol%, 4.00 mol%, 4.50 mol%, 5.00 mol%, 5.50 mol%, 5.80 mol%, 2.58 mol%, 4.68 mol%, 4.66 mol%, 4.61 mol%, 3.16 mol%, 3.72 mol%, 4.21 mol%, 4.57 mol%, 5.10 mol%, 5.54 mol%, 4.72 mol%, 2.18 mol%, 2.36 mol%, 3.31 mol%, 4.63 mol% or 6.00 mol% of $ZrO_2$, or may contain $ZrO_2$ in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, CaO is an optional component of network-modifying oxide for glass formation. An appropriate amount of CaO helps to reduce high-temperature viscosity of glass and increase density of glass, facilitate glass forming, and at the same time can enhance the network structure, so that stress yield in the chemical strengthening process is enhanced. However, excessive CaO will lead to a sharp decrease in the crystallinity of the glass, and affect the intrinsic strength. Therefore, the molar percentage of CaO is controlled at 0.00 mol%-5.00 mol%.

In some embodiments, the microcrystalline glass may contain 0.00 mol%-5.00 mol%, 0.10 mol%-4.00 mol%, 0.00 mol%-2.50 mol%, 0.50 mol%-3.80 mol%, 0.00 mol%-4.00 mol%, 0.80 mol%-2.00 mol%, 0.00 mol%-1.60 mol%, 0.00 mol%-1.00 mol%, 1.50 mol%-4.00 mol%, 0.00 mol%-2.00 mol%, 1.00 mol%-4.00 mol% or 0.10 mol%-5.00 mol% of CaO.

In some embodiments, the microcrystalline glass may contain 0.00 mol%, 0.10 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.80 mol%, 2.00 mol%, 2.50 mol%, 3.00 mol%, 4.00 mol%, 3.72 mol%, 0.94 mol%, 0.92 mol%, 0.93 mol%, ,1.83 mol%, 2.67 mol% or 5.00 mol% of CaO, or may contain CaO in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, $Li_2O$, as essential component, is a network-modifying oxide for glass formation. It not only can provide free oxygen, improve glass viscosity and promote melting and clarification of glass melt, but also is one of main components for forming lithium disilicate crystals. Moreover, $Li_2O$ can also provide alkali metal lithium ions for ion exchange with large-radius ions in the molten salt bath, which is a critical factor affecting an attainable stress level of the chemically strengthened microcrystalline glass. However, excessive $Li_2O$ may deteriorate stability of a crystallization process of glass, and even cause precipitation of other undesired crystalline phases, thus deteriorating the optical properties of the microcrystalline glass. Therefore, the molar percentage of $Li_2O$ is controlled at 27.00 mol%-32.00 mol%, optionally, at 28.00 mol%-31.00 mol%.

In some embodiments, the microcrystalline glass may contain 27.00 mol%-32.00 mol%, 27.50 mol%-31.00 mol%, 27.00 mol%-30.00 mol%, 27.50 mol%-29.50 mol%, 28.00 mol%-31.00 mol%, 28.50 mol%-31.00 mol%, 29.00 mol%-30.50 mol% or 29.50 mol%-32.00 mol% of $Li_2O$. In some embodiments, the microcrystalline glass may contain 27.00 mol%, 27.50 mol%, 28.00 mol%, 28.50 mol%, 29.00 mol%, 29.50 mol%, 30.00 mol%, 30.50 mol%, 31.00 mol%, 31.50 mol%, 27.54 mol%, 28.59 mol%, 29.52 mol%, 29.08 mol%, 29.80 mol%, 29.93 mol%, 29.30 mol%, 31.51 mol%, 30.22 mol%, 29.66 mol%, 29.25 mol% or 32.00 mol% or $Li_2O$, or may contain $Li_2O$ in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, MgO is an optional component, and an appropriate amount of MgO can play a role in adjusting components of glass phase in the microcrystalline glass, but excessive MgO will affect growth of crystals and a crystalline phase structure of the microcrystalline glass. Therefore, the molar percentage of MgO is controlled at 0.00 mol%-2.00 mol%.

In some embodiments, the microcrystalline glass may contain 0.00 mol%-2.00 mol%, 0.00 mol%-1.60 mol%, 0.50 mol%-1.60 mol%, 0.80 mol%-1.50 mol%, 0.00 mol%-1.00 mol%, 0.00 mol%-0.50 mol%, 0.10 mol%-1.10 mol%, 0.10 mol%-1.50 mol% or 0.00 mol%-1.40 mol% of MgO. In some embodiments, the microcrystalline glass may contain 0.00 mol%, 0.50 mol%, 0.70 mol%, 0.85 mol%, 0.95 mol%, 1.00 mol%, 1.10 mol%, 1.20 mol%, 1.30 mol%, 1.34 mol%, 1.40 mol%, 1.50 mol%, 1.60 mol%, 1.80 mol% or 2.00 mol% of MgO, or may contain MgO in a numerical range constituted by any two specific numerical values in the above as endpoints, as long as the microcrystalline glass or the chemically strengthened microcrystalline glass with desired performance in the present invention can be obtained. It should be understood that in embodiments, any of the above ranges can be combined with any other ranges, as long as the microcrystalline glass or the chemically strengthened microcrystalline glass with desired performance in the present invention can be obtained.

In the present invention, ZnO, as a network intermediate, is an optional component. An appropriate amount of ZnO may combine with free oxygen, adjust the glass structure, and may remain in the glass phase of the microcrystalline glass and increase the glass viscosity. However, excessive ZnO will affect growth of crystals, and affect a crystalline phase structure of the microcrystalline glass. Therefore, the molar percentage of ZnO is controlled at 0.00 mol%-2.00 mol%.

In some embodiments, the microcrystalline glass may contain 0.00 mol%-2.00 mol%, 0.00 mol%-1.70 mol%, 0.50 mol%-1.60 mol%, 0.80 mol%-1.50 mol%, 0.00 mol%-1.00 mol%, 0.00 mol%-0.50 mol%, 0.10 mol%-1.10 mol%, 0.10 mol%-1.50 mol% or 0.00 mol%-1.40 mol% of ZnO. In some embodiments, the microcrystalline glass may contain 0.00 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.67 mol%, 1.80 mol% or 2.00 mol% of ZnO, or may contain ZnO in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, $Na_2O$, as an optional component, is a network-modifying oxide. An appropriate amount of $Na_2O$ can provide free oxygen, improve the glass viscosity, promote melting and clarification of glass melt, and can also regulate a chemical strengthening rate at the same time. However, excessive $Na_2O$ will not only reduce crystallinity of the microcrystalline glass, but also affect a chemical strengthening effect. Therefore, the molar percentage of $Na_2O$ is controlled at 0.00 mol%-3.00 mol%.

In some embodiments, the microcrystalline glass may contain 0.00 mol%-3.00 mol%, 0.00 mol%-2.80 mol%, 0.00 mol%-1.00 mol%, 0.10 mol%-2.70 mol%, 0.50 mol%-1.60 mol%, 0.60 mol%-1.00 mol%, 2.50 mol%-3.00 mol% or 0.00 mol%-0.50 mol% of $Na_2O$. In some embodiments, the microcrystalline glass may contain 0.00 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.80 mol%, 2.00 mol%, 2.50 mol%, 2.60 mol% or 3.00 mol% of $Na_2O$, or may contain $Na_2O$ in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, $K_2O$, as a glass-network-modifying oxide, is one of optional components. An approximate amount of $K_2O$ can provide free oxygen, so as to increase an oxygen-silicon ratio in the glass structure, but excessive $K_2O$ will affect the network structure of glass, and affect glass optical properties, thermal stability, chemical stability, mechanical strength and weather resistance of glass. Therefore, the molar percentage of $K_2O$ is controlled at 0.00 mol%-1.00 mol%.

In some embodiments, the microcrystalline glass may contain 0.00 mol%-1.00 mol%, 0.50 mol%-1.00 mol%, 0.00 mol%-0.50 mol%, 0.85 mol%-1.00 mol% or 0.00 mol%-0.15 mol% of $K_2O$. In some embodiments, the microcrystalline glass may contain 0.00 mol%, 0.15 mol%, 0.50 mol%, 0.70 mol%, 0.85 mol%, 0.92 mol%, 0.95 mol% or 1.00 mol% of $K_2O$, or may contain $K_2O$ in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, $B_2O_3$ is an optional component, and an approximate amount of $B_2O_3$ can be used as a fluxing agent and/or softening agent to help improve molding and hot bending effects of glass, but excessive $B_2O_3$ will cause a crystal precipitation process uncontrollable, and deteriorate the optical properties of the microcrystalline glass. Therefore, the molar percentage of $B_2O_3$ is controlled at 0.00 mol%-1.00 mol%.

In some embodiments, the microcrystalline glass may contain 0.00 mol%-1.00 mol%, 0.00 mol%-0.50 mol%, 0.50 mol%-1.00 mol%, 0.10 mol%-0.85 mol%, 0.85 mol%-1.00 mol% or 0.25 mol%-0.75 mol% of $B_2O_3$. In some embodiments, the microcrystalline glass may contain 0.00 mol%, 0.10 mol%, 0.25 mol%, 0.50 mol%, 0.60 mol%, 0.65 mol%, 0.70 mol%, 0.75 mol%, 0.85 mol%, 0.95 mol% or 1.00 mol% of $B_2O_3$, or may contain $B_2O_3$ in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In the present invention, SrO, as an optional component, is an alkaline earth metal oxide. An appropriate amount of SrO can play a role in adjusting a glass phase component in the microcrystalline glass, help to increase density of the microcrystalline glass, and increase the Young's modulus thereof. Moreover, it also facilitates reducing the expansion softening point of the microcrystalline glass, thereby being beneficial to produce 3D curved microcrystalline glass by hot bending the microcrystalline glass. However, excessive SrO will deteriorate the optical properties of the microcrystalline glass. Therefore, the molar percentage of SrO is controlled at 0.00 mol%-2.00 mol%.

In some embodiments, the microcrystalline glass may contain 0.00 mol%-2.00 mol%, 0.10 mol%-2.00 mol%, 0.00 mol%-1.00 mol%, 0.10 mol%-1.00 mol%, 0.30 mol%-1.90 mol%, 0.40 mol%-1.20 mol%, 1.20 mol%-2.00 mol%, 0.00 mol%-0.30 mol%, 0.85 mol%-1.40 mol%, 0.85 mol%-1.90 mol%, 0.50 mol%-1.20 mol% or 1.00 mol%-2.00 mol% of SrO. In some embodiments, the microcrystalline glass may contain 0.00 mol%, 0.30 mol%, 0.46 mol%, 0.50 mol%, 0.70 mol%, 0.85 mol%, 0.92 mol%, 0.95 mol%, 1.00 mol%, 1.10 mol%, 1.20 mol%, 1.30 mol%, 1.40 mol%, 1.50 mol%, 1.60 mol%, 1.80 mol%, 1.83 mol% or 2.00 mol% of SrO, or may contain SrO in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments, in terms of molar percentage of oxides, the composition of the microcrystalline glass includes: $SiO_2$: 60.00 mol%-65.00 mol%, $Al_2O_3$: 0.00 mol%-2.00 mol%, $P_2O_5$: 1.50 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00

mol%-1.00 mol%, Li$_2$O: 27.00 mol%-32.00 mol%, CaO: 0.00 mol%-4.00 mol%, B$_2$O$_3$: 0.00 mol%-1.00 mol%, and SrO: 0.00 mol%-2.00 mol%. By enabling the microcrystalline glass to satisfy the above composition, it not only can endow high intrinsic strength and excellent optical properties to the microcrystalline glass, but also can ensure the chemical strengthening effect thereof, and ensure the microcrystalline glass to obtain a relatively high stress level after the chemical strengthening, and further to obtain a relatively high mechanical strength performance and excellent deformation resistance.

In some embodiments, on the basis of the above composition ranges, the composition of the microcrystalline glass of the present invention can further include other components. For example, in some specific embodiments, in terms of molar percentage of oxides, the composition of the microcrystalline glass further includes: Y$_2$O$_3$: 0.00 mol%-1.00 mol%, La$_2$O$_3$: 0.00 mol%-1.00 mol%, and Ta$_2$O$_5$: 0.00 mol%-1.00 mol%.

In the present invention, selectively adding an appropriate amount of Y$_2$O$_3$, La$_2$O$_3$ or Ta$_2$O$_5$ helps to increase density of the microcrystalline glass and increase the Young's modulus thereof, but may also increase the refractive index of the microcrystalline glass, so that the optical properties of the microcrystalline glass are reduced. Therefore, the molar percentage of Y$_2$O$_3$, La$_2$O$_3$ or Ta$_2$O$_5$ is controlled at 0.00 mol%-1.00 mol%.

In some embodiments, in the microcrystalline glass, molar percentage of Y$_2$O$_3$, La$_2$O$_3$ or Ta$_2$O$_5$ may be 0.00 mol%, 0.10 mol%, 0.20 mol%, 0.30 mol%, 0.40 mol%, 0.46 mol%, 0.50 mol%, 0.53 mol%, 0.60 mol%, 0.70 mol%, 0.75 mol%, 0.80 mol%, 0.85 mol%, 0.90 mol%, 0.95 mol% or 1.00 mol%, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments, in terms of molar percentage of oxides, the composition of the microcrystalline glass includes: SiO$_2$: 60.50 mol%-64.00 mol%, Al$_2$O$_3$: 0.00 mol%-2.00 mol%, P$_2$O$_5$: 1.50 mol%-2.50 mol%, ZrO$_2$: 3.20 mol%-6.00 mol%, MgO: 0.00 mol%-2.00 mol%, ZnO: 0.00 mol%-2.00 mol%, Na$_2$O: 0.00 mol%-1.00 mol%, K$_2$O: 0.00 mol%-1.00 mol%, Li$_2$O: 28.00 mol%-31.00 mol%, CaO: 0.00 mol%-2.50 mol%, B$_2$O$_3$: 0.00 mol%-1.00 mol%, SrO: 0.00 mol%-2.00 mol%, Y$_2$O$_3$: 0.00 mol%-1.00 mol%, La$_2$O$_3$: 0.00 mol%-1.00 mol%, and Ta$_2$O$_5$: 0.00 mol%-1.00 mol%. By enabling the microcrystalline glass to satisfy the above composition, it is beneficial to prepare the chemically strengthened microcrystalline glass having a high stress level, thereby being conducive to ensuring the prepared chemically strengthened microcrystalline glass to have an excellent mechanical strength performance and excellent deformation resistance.

In some embodiments of the present invention, in terms of contents of various oxides represented by molar percentage in the composition of the microcrystalline glass, the composition of the microcrystalline glass further satisfies: $0.90 \leq SiO_2 + Li_2O \leq 0.96$. Using the composition satisfying this relational expression is beneficial to ensure precipitation of a desired content of lithium disilicate crystals from the microcrystalline glass and effective reduction of precipitation of other crystals (such as petalite crystals), ensure the microcrystalline glass to obtain relatively high intrinsic strength and optical properties, enable the microcrystalline glass to obtain a high stress level after chemical strengthening, and at the same time, ensure the base glass to be not devitrified when preparing the microcrystalline glass through heat treatment, or ensure the base glass to be not devitrified in a melting process. In some embodiments, a value of $SiO_2 + Li_2O$ may be, for example, 0.900, 0.904, 0.905, 0.910, 0.915, 0.920, 0.925, 0.930, 0.935, 0.940, 0.945, 0.950 or 0.960, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments of the present invention, in terms of contents of various oxides represented by molar percentage in the composition of the microcrystalline glass, the composition of the microcrystalline glass further satisfies: $Al_2O_3 / SiO_2 \leq 0.030$. By adjusting the content relationship between Al$_2$O$_3$ and SiO$_2$, it is beneficial to ensure formation of a desired crystalline phase structure while stabilizing the glass network structure, and is also conducive for the microcrystalline glass to obtain a high stress level after chemical strengthening, further facilitating ensuring the microcrystalline glass to obtain a high mechanical strength performance and excellent deformation resistance. In some embodiments, a value of $Al_2O_3 / SiO_2$ may be, for example, 0, 0.005, 0.010, 0.015, 0.020, 0.025 or 0.030, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments of the present invention, in terms of contents of various oxides represented by molar percentage in the composition of the microcrystalline glass, the composition of the microcrystalline glass further satisfies:

$0.31 \leq ZrO_2 / (CaO + ZrO_2 + Al_2O_3) \leq 1.50$, optionally, $0.32 \leq ZrO_2 / (CaO + ZrO_2 + Al_2O_3) \leq 1.20$, and further optionally, $0.36 \leq ZrO_2 / (CaO + ZrO_2 + Al_2O_3) \leq 1.10$. By making components $CaO$, $ZrO_2$, and $Al_2O_3$, which have effects of strengthening or toughening the glass structure, satisfy specific content relationships, it is beneficial to better exert effects of various components, thereby ensuring high intrinsic strength of the microcrystalline glass and a high stress level thereof after strengthening, and further beneficial to ensure the microcrystalline glass to obtain a high mechanical strength performance and excellent deformation resistance. In some embodiments, a value of $ZrO_2 / (CaO + ZrO_2 + Al_2O_3)$ may be, for example, 0.31, 0.32, 0.34, 0.36, 0.37, 0.33, 0.83, 0.77, 0.67, 0.69, 0.62, 0.75, 0.59, 0.79, 0.80, 1.00, 0.35, 0.66, 0.50, 0.70, 0.40, 0.60, 0.90, 1.10, 1.20, 1.30, 1.40 or 1.50, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments of the present invention, in terms of contents of various oxides represented by molar percentage in the composition of the microcrystalline glass, the composition of the microcrystalline glass further satisfies: $0.10 \leq ZrO_2 / (100\% - 3 \times Li_2O) \leq 0.60$, optionally, $0.12 \leq ZrO_2 / (100\% - 3 \times Li_2O) \leq 0.52$, further optionally, $0.16 \leq ZrO_2 / (100\% - 3 \times Li_2O) \leq 0.50$. By adjusting $ZrO_2$ and $Li_2O$ to satisfy specific content relationships, it facilitates ensuring the microcrystalline glass to form a desired crystalline phase structure and achieving excellent optical properties, and better exerting nucleating and/or toughening effects of $ZrO_2$, so as to ensure the microcrystalline glass to have high intrinsic strength, thereby facilitating ensuring the microcrystalline glass to obtain a high mechanical strength performance and excellent deformation resistance. In some embodiments, a value of $ZrO_2 / (100\% - 3 \times Li_2O)$ may be, for example, 0.10, 0.12, 0.15, 0.33, 0.44, 0.40, 0.25, 0.35, 0.41, 0.37, 0.46, 0.48, 0.39, 0.13, 0.43, 0.42, 0.50, 0.52, 0.56 or 0.60, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments of the present invention, in terms of contents of various oxides represented by molar percentage in the composition of the microcrystalline glass, the composition of the microcrystalline glass further satisfies: $0.034 \leq ZrO_2 / SiO_2 \leq 0.100$, optionally, $0.035 \leq ZrO_2 / SiO_2 \leq 0.095$, further optionally, $0.055 \leq ZrO_2 / SiO_2 \leq 0.095$. By adjusting $ZrO_2$ and $SiO_2$ to satisfy specific content relationships, it is beneficial to better exert the toughening effect of $ZrO_2$ while ensuring the microcrystalline glass to form a desired crystalline phase structure and achieve excellent optical properties, ensure the microcrystalline glass to have high intrinsic strength, and further beneficial to ensure the microcrystalline glass to obtain a high mechanical strength performance and excellent deformation resistance. In some embodiments, a value of $ZrO_2 / SiO_2$ may be, for example, 0.041, 0.075, 0.051, 0.060, 0.067, 0.083, 0.091, 0.035, 0.037, 0.052, 0.034, 0.100, 0.095 or 0.055, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments of the present invention, in terms of contents of various oxides represented by molar percentage in the composition of the microcrystalline glass, the composition of the microcrystalline glass further satisfies: $CaO + Al_2O_3 \leq 0.065$, optionally, $CaO + Al_2O_3 \leq 0.055$, further optionally, $CaO + Al_2O_3 \leq 0.050$. By controlling a total content of $CaO$ and $Al_2O_3$ to meet specific requirements, it is beneficial to avoid influence on crystal precipitation of the microcrystalline glass while exerting the enhancing effect thereof, thereby ensuring the microcrystalline glass to realize a desired crystalline phase structure, and further facilitating ensuring the microcrystalline glass to obtain a high mechanical strength performance and excellent deformation resistance. In some embodiments, a value of $CaO+Al_2O_3$ may be, for example, 0.000, 0.053, 0.009, 0.014, 0.023, 0.032, 0.041, 0.012, 0.024, 0.050, 0.055 or 0.065, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments of the present invention, in terms of contents of various oxides represented by molar percentage in the composition of the microcrystalline glass, the composition of the microcrystalline glass further satisfies: $(CaO + Al_2O_3) / Li_2O \leq 0.25$, optionally, $(CaO + Al_2O_3) / Li_2O \leq 0.20$, further optionally, $(CaO + Al_2O_3) / Li_2O \leq 0.14$. By adjusting $CaO$, $Al_2O_3$, and $Li_2O$ to satisfy specific content relationships, it is beneficial to ensure precipitation of a desired content of lithium disilicate crystalline phase in the microcrystalline glass while exerting enhancing effects of CaO and/or $Al_2O_3$, thereby ensuring the microcrystalline glass to realize a desired crystalline phase structure, and further facilitating ensuring the microcrystalline glass to obtain a high mechanical strength performance and excellent deformation resistance. In some embodiments, a value of $(CaO + Al_2O_3) / Li_2O$ may be, for example, 0.00, 0.19, 0.03, 0.05, 0.08, 0.11, 0.15, 0.04, 0.14, 0.16, 0.20 or 0.25, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments of the present invention, in terms of contents of various oxides represented by molar percentage in the composition of the microcrystalline glass, the composition of the microcrystalline glass further satisfies: $0.12 \leq (ZrO_2 - Na_2O) / (SiO_2 - 2 \times Li_2O) \leq 6.40$, optionally, $0.14 \leq (ZrO_2 - Na_2O) / (SiO_2 - 2 \times Li_2O) \leq 6.16$, further optionally, $0.50 \leq (ZrO_2 - Na_2O) / (SiO_2 - 2 \times Li_2O) \leq 3.00$. By adjusting $ZrO_2$, $Na_2O$, $SiO_2$ and $Li_2O$ to satisfy specific content relationships, it is beneficial to better exert effects of various components, enable the microcrystalline glass to obtain high intrinsic strength and excellent optical properties, and enable the microcrystalline glass to obtain a high stress level and excellent deformation resistance after chemical strengthening. In some embodiments, a value of $(ZrO_2 - Na_2O) / (SiO_2 - 2 \times Li_2O)$ may be, for example, 0.12, 0.35, 0.87, 2.08, 1.72, 0.15, 1.55, 2.63, 2.73, 1.03, 0.28, 6.15, 0.86, 1.21, 6.20, 6.38, 0.14, 6.16, 0.50, 6.40 or 3.00, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments of the present invention, in terms of contents of various oxides represented by molar percentage in the composition of the microcrystalline glass, the composition of the microcrystalline glass further satisfies: $Na_2O / SiO_2 \leq 0.05$, optionally, $Na_2O / SiO_2 \leq 0.04$, further optionally, $Na_2O / SiO_2 \leq 0.02$. By adjusting $Na_2O$ and $SiO_2$ to satisfy specific content relationships, it is beneficial for the microcrystalline glass to obtain a high stress level and an excellent deformation resistance after chemical strengthening. In some embodiments, a value of $Na_2O / SiO_2$ may be, for example, 0.00, 0.01, 0.02, 0.03, 0.04 or 0.05, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass or the chemically strengthened microcrystalline glass with desired performance in the present invention can be obtained.

In some embodiments of the present invention, the microcrystalline glass has the density $\rho \geq 2.50$ g/cm$^3$, and optionally, the microcrystalline glass has the density $\rho$ of 2.50 g/cm$^3$-2.75 g/cm$^3$. In some embodiments of the present invention, the microcrystalline glass has the refractive index $\leq 1.60$. The microcrystalline glass satisfying the density and/or the refractive index can be ensured to have relatively high intrinsic strength and excellent optical properties.

In some embodiments, the density $\rho$ of the microcrystalline glass may be 2.50 g/cm$^3$, 2.54 g/cm$^3$, 2.55 g/cm$^3$, 2.56 g/cm$^3$, 2.57 g/cm$^3$, 2.58 g/cm$^3$, 2.59 g/cm$^3$, 2.60 g/cm$^3$, 2.61 g/cm$^3$, 2.62 g/cm$^3$, 2.63 g/cm$^3$, 2.64 g/cm$^3$, 2.65 g/cm$^3$, 2.70 g/cm$^3$ or 2.75 g/cm$^3$, or may be a value no less than any of the above specific values, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass with desired performance in the present invention can be obtained.

In some embodiments, the refractive index of the microcrystalline glass may be 1.50, 1.51, 1.52, 1.53, 1.54, 1.55, 1.56, 1.57, 1.58, 1.59 or 1.60, or a numerical value not more than any of the above specific numerical values, or a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass with desired performance in the present invention can be obtained.

In some embodiments of the present invention, the crystallinity of the microcrystalline glass is 30.00 wt%-90.00 wt%, optionally, the crystallinity is 50.00 wt%-90.00 wt%, and further optionally, the crystallinity is 65.00 wt%-90.00 wt%. A relatively high content of crystalline phases is beneficial to improve the mechanical strength performance of the microcrystalline glass while ensuring excellent optical properties of the microcrystalline glass. In some embodiments, the crystallinity of the microcrystalline glass may be 30.00 wt%-90.00 wt%, 45.00 wt%-85.00 wt%, 50.00 wt%-90.00 wt%, 55.00 wt%-85.00 wt%, 60.00 wt%-85.00 wt%, 65.00 wt%-90.00 wt%, 70.00 wt%-90.00 wt% or 68.00 wt%-85.00 wt%. In some embodiments, the crystallinity of the microcrystalline glass may be 30.00 wt%, 35.00 wt%, 40.00 wt%, 45.00 wt%, 50.00 wt%, 55.00 wt%, 60.00 wt%, 65.00 wt%, 70.00 wt%, 75.00 wt%, 80.00 wt %, 85.00 wt % or 90.00 wt %, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass with desired performance in the present invention can be obtained.

In some embodiments of the present invention, "the primary crystalline phase is lithium disilicate", "the lithium disilicate crystalline phase has a higher weight percentage than other crystalline phases present in the microcrystalline glass" or like expressions means that the lithium disilicate crystalline phase accounts for more than 70 weight percentage (wt%) of all crystalline phases of the microcrystalline glass according to embodiments of the present invention.

In some embodiments of the present invention, non-limiting examples of other potential crystalline phases in the microcrystalline glass include: a petalite crystalline phase, and/or a lithium phosphate crystalline phase. In some embodiments, the microcrystalline glass further contains the petalite crystalline phase. Optionally, the petalite crystalline phase accounts for 20% or less of the microcrystalline glass in weight percentage, and further optionally, the petalite crystalline phase may account for 15% or less, 10% or less, or 5% or less of the microcrystalline glass in weight percentage. By controlling precipitation of other crystalline phases, it is more beneficial to ensure lithium disilicate to form a desired interlocking structure, thereby ensuring the microcrystalline glass to obtain a high mechanical strength performance, excellent optical properties and excellent deformation resistance.

In some embodiments of the present invention, in the microcrystalline glass, the average crystal size is $\leq 100$ nm, optionally, the average crystal size is $\leq 50$ nm, and further optionally, the average crystal size is 15 nm-45 nm. Satisfying a relatively small average crystal size facilitates ensuring the microcrystalline glass to have excellent optical properties. In some embodiments, the average crystal size may be 10 nm-100 nm, 20 nm-90 nm, 30 nm-80 nm, 40 nm-60 nm, 10 nm-30 nm, 10 nm-20 nm, 5 nm-35 nm, 15 nm-35 nm or 15 nm-45 nm. In some embodiments, the average crystal size may be 5 nm, 10 nm, 15 nm, 20 nm, 25 nm, 30 nm, 35 nm, 40 nm, 45 nm, 50 nm, 55 nm, 60 nm, 70 nm, 80 nm, 90 nm or 100 nm, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass with desired performance in the present invention can be obtained.

In some embodiments of the present invention, the Young's modulus of the microcrystalline glass is $\geq 100.00$ GPa, optionally, the Young's modulus of the microcrystalline glass is $\geq 110.00$ GPa, and further optionally, the Young's modulus of the microcrystalline glass is 114 GPa-130 GPa. Having a relatively high Young's modulus indicates that the microcrystalline glass has relatively high intrinsic strength, which is beneficial for it to obtain a relatively high mechanical strength performance and excellent deformation resistance. In some embodiments, the Young's modulus of the microcrystalline glass may be 100.00 GPa-150 GPa, 105.00 GPa-140 GPa, 110.00 GPa-130 GPa or 114 GPa-130 GPa or 114.00 GPa-125 GPa. In some embodiments, the Young's modulus of the microcrystalline glass may be 100.00 GPa, 105.00 GPa, 110.00 GPa, 114.00 GPa, 115.00 GPa, 120.00 GPa, 125.00 GPa, 130.00 GPa, 140.00 GPa or 150.00 GPa, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass with desired performance in the present invention can be obtained.

In some embodiments of the present invention, when the microcrystalline glass has the thickness of 0.5 mm, b value of the microcrystalline glass is $\leq 1.0$, and optionally, the b value is $\leq 0.8$. The microcrystalline glass satisfying the optical b value can be ensured to have relatively superior optical properties and display effect, and is suitable for use in display screens requiring high display effect. In some embodiments, when the microcrystalline glass has the thickness of 0.5 mm, b value of the microcrystalline glass may be 0.1, 0.2, 0.3, 0.4, 0.5, 0.6, 0.7, 0.8, 0.9 or 1.0, or may be a numerical value not more than any of the above specific numerical values, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass with desired performance in the present invention can be obtained.

In some embodiments of the present invention, the microcrystalline glass is transparent in the visible light range; when the microcrystalline glass has the thickness of 0.5 mm, for light with a wavelength of 550 nm, transmittance of the microcrystalline glass is $\geq 85.00\%$, and optionally, the transmittance of the microcrystalline glass is $\geq 90.00\%$. The microcrystalline glass satisfying the transmittance can be ensured to have relatively good light transmittance and relatively good transparency, and is suitable for use in display screens requiring high display effect. The "visible light range" herein refers to light in a wavelength band of 360 nm-740 nm.

In some embodiments, when the thickness of the microcrystalline glass is 0.5 mm, for light with a wavelength of 550 nm, the transmittance of the microcrystalline glass may be 85.00%, 86.00%, 87.00%, 88.00%, 89.00%, 90.00%, 90.50%, 91.00% or 92.00%, or may be a numerical value in a numerical range constituted by any two specific numerical values in the above as endpoints, as long as the microcrystalline glass or the chemically strengthened microcrystalline glass with desired performance in the present invention can be obtained. It should be understood that in specific embodiments, any of the above ranges can be combined with any other ranges, as long as the microcrystalline glass with desired performance in the present invention can be obtained.

The microcrystalline glass of the present invention has a relatively high transmittance and a relatively low b value, which indicates that the microcrystalline glass of the present invention has relatively excellent optical properties, good uniformity, and a transparent state, and can satisfy the application requirements of cover glass of display screens.

In some embodiments of the present invention, the upper limit temperature of crystal precipitation of the base glass corresponding to the microcrystalline glass is 1,000 °C-1,100 °C. Satisfying this range of upper limit temperature of crystal precipitation is beneficial to realize industrial mass production.

In some embodiments of the present invention, the expansion softening point of the microcrystalline glass is 750 °C-850 °C, and optionally, the expansion softening point of the microcrystalline glass is 750 °C-830 °C. An appropriate expansion softening point facilitates 3D hot bending forming of the microcrystalline glass, so as to produce 3D curved microcrystalline glass with a high strength performance. In some embodiments, the expansion softening point of the microcrystalline glass may be 750 °C, 760 °C, 770 °C, 780 °C, 790 °C, 800 °C, 810 °C, 820 °C, 830 °C, 840 °C or 850 °C, or may be a numerical value in a numerical range constituted by any two specific numerical values in the above as endpoints. It should be understood that in specific embodiments, any of the above ranges can be combined with any other ranges, as long as the microcrystalline glass with desired performance in the present invention can be obtained.

In the present invention, upon a hot bending treatment on the microcrystalline glass, the 3D curved microcrystalline glass can be prepared. When product composition is calculated in terms of molar percentage of oxides, the composition of the 3D curved microcrystalline glass is identical or substantially identical to that of the microcrystalline glass.

The microcrystalline glass of the present invention can be prepared from base glass through heat treatment, and in terms of molar percentage of oxides, the composition of the base glass used is identical or substantially identical to that of the microcrystalline glass.

In the present invention, the base glass can be prepared by forming methods in the prior art, which is not limited in any way in the present invention. For example, the forming methods may include but are not limited to floating, overflowing, calendering, casting, or the like. Exemplarily, various raw materials and a fining agent can be mixed uniformly (uniformity is not less than 98%), and annealed after melting and forming to yield the base glass. Further, process parameters may include: a melting temperature of 1,480 °C-1,680 °C, an annealing temperature of 450 °C-650 °C, and holding at the annealing temperature for 10 h-48 h. Further, the fining agent may include, but is not limited to, one or more of sodium chloride, tin oxide, antimony oxide, arsenic oxide, etc., and the fining agent can be added in an amount of 0-1 wt% of a total amount of various raw materials.

In the present invention, when the heat treatment is performed on the base glass to prepare the microcrystalline glass, the heat treatment can be performed, for example, in a crystallization furnace or an annealing furnace, and a method of the heat treatment may include, but is not limited to, a one-step heat treatment, a two-step heat treatment or a multi-step heat treatment. For example, it may include the two-step heat treatment involving a nucleation treatment followed by a crystallization treatment. Process conditions of the heat treatment may include, but are not limited to: a nucleation temperature may be 500 °C-700 °C, and a nucleation isothermal duration may be 10 min-1,440 min; a crystallization temperature may be 600 °C-800 °C, a crystallization isothermal duration may be 5 min-1,440 min; a heating rate in a whole process may be 5 °C/min-20 °C/min, and a cooling rate may be 0.1 °C/min-3 °C/min. After the heat treatment, those skilled in the art could further perform other conventional steps so as to obtain a microcrystalline glass sample meeting demanded specification or requirements, for example, steps such as cutting treatment, CNC (computer numerical control) machining treatment or polishing treatment can be performed.

The present invention further provides a chemically strengthened microcrystalline glass, where composition at a center of the chemically strengthened microcrystalline glass is identical to that of the preceding microcrystalline glass, and the chemically strengthened microcrystalline glass contains a compression stress layer region extending from a surface of the chemically strengthened microcrystalline glass to a compression depth, and has tensile stress in the interior of the chemically strengthened microcrystalline glass.

It should be understood that compared with the microcrystalline glass before chemical strengthening, the composition on a surface of a microcrystalline glass article after the chemical strengthening may be different from that of the microcrystalline glass before the chemical strengthening (not undergoing an ion exchange process). This is because that during the chemical strengthening, in freshly formed microcrystalline glass (the microcrystalline glass before the chemical strengthening), one type of alkali metal ions (e.g., $Li^+$ or $Na^+$) on the surface of the microcrystalline glass will be replaced by relatively large alkali metal ions (e.g., $Na^+$ or $K^+$). However, in embodiments, the glass composition and phase set at or near a depth enter of the microcrystalline glass article still have the composition and phase set of the freshly formed microcrystalline glass. That is to say, in the present invention, the composition and phase set at the center or in the tensile stress layer of the chemically strengthened microcrystalline glass prepared by chemically strengthening treatment are identical or substantially identical to those of the freshly formed microcrystalline glass.

In the present invention, the chemically strengthened microcrystalline glass contains a lithium disilicate crystalline phase, where the lithium disilicate crystalline phase has a higher weight percentage than other crystalline phases present in the chemically strengthened microcrystalline glass; in terms of molar percentage of oxides, a composition at the center of the chemically strengthened microcrystalline glass includes: $SiO_2$: 55.00 mol%-65.00 mol%, $Al_2O_3$: 0.00 mol%-2.00 mol%, $P_2O_5$: 1.00 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%.

In terms of contents of oxides represented by molar percentage, the composition at the center of the chemically strengthened microcrystalline glass satisfies: $2.00 \leq SiO_2 / Li_2O \leq 2.40$, optionally, $2.00 \leq SiO_2 / Li_2O \leq 2.30$, and further optionally, $2.02 \leq SiO_2 / Li_2O \leq 2.20$.

In some embodiments of the present invention, in terms of contents of oxides represented by molar percentage, the composition at the center of the chemically strengthened microcrystalline glass further satisfies: $0.90 \leq SiO_2 + Li_2O \leq 0.96$; and/or $Al_2O_3 / SiO_2 \leq 0.030$; and/or $0.31 \leq ZrO_2 / (CaO + ZrO_2 + Al_2O_3) \leq 1.50$; and/or $0.10 \leq ZrO_2 / (100\% - 3 \times Li_2O) \leq 0.60$; and/or $0.034 \leq ZrO_2 / SiO_2 \leq 0.100$; and/or $CaO + Al_2O_3 \leq 0.065$; and/or $(CaO + Al_2O_3) / Li_2O \leq 0.25$; and/or $0.12 \leq (ZrO_2 - Na_2O) / (SiO_2 - 2 \times Li_2O) \leq 6.40$; and/or $Na_2O / SiO_2 \leq 0.05$.

In some embodiments of the present invention, in terms of molar percentage of oxides, the composition at the center of the chemically strengthened microcrystalline glass includes: $SiO_2$: 60.00 mol%-65.00 mol%, $Al_2O_3$: 0.00 mol%-2.00 mol%, $P_2O_5$: 1.50 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-4.00 mol%, $B_2O_3$: 0.00 mol%-1.00 mol%, and SrO: 0.00 mol%-2.00 mol%.

In some embodiments of the present invention, in terms of molar percentage of oxides, the composition at the center of the chemically strengthened microcrystalline glass further includes: $Y_2O_3$: 0.00 mol%-1.00 mol%, $La_2O_3$: 0.00 mol%-1.00 mol%, and $Ta_2O_5$: 0.00 mol%-1.00 mol%.

In some embodiments of the present invention, in terms of molar percentage of oxides, the composition at the center of the chemically strengthened microcrystalline glass includes: $SiO_2$: 60.50 mol%-64.00 mol%, $Al_2O_3$: 0.00 mol%-2.00 mol%, $P_2O_5$: 1.50 mol%-2.50 mol%, $ZrO_2$: 3.20 mol%-6.00 mol%, MgO: 0.00 mol%-2.00 mol%, ZnO: 0.00 mol%-2.00 mol%, $Na_2O$: 0.00 mol%-1.00 mol%, $K_2O$: 0.00 mol%-1.00 mol%, $Li_2O$: 28.00 mol%-31.00 mol%, CaO: 0.00 mol%-2.50 mol%, $B_2O_3$: 0.00 mol%-1.00 mol%, SrO: 0.00 mol%-2.00 mol%, $Y_2O_3$: 0.00 mol%-1.00 mol%, $La_2O_3$: 0.00 mol%-1.00 mol%, and $Ta_2O_5$: 0.00 mol%-1.00 mol%.

In some embodiments of the present invention, the chemically strengthened microcrystalline glass has DOL_0 of 0.18 t-0.25 t, where DOL_0 is depth of the compression stress layer, and t is thickness of the chemically strengthened microcrystalline glass. In some embodiments, the depth DOL_0 of the compression stress layer of the chemically strengthened microcrystalline glass may be 0.18 t-0.25 t, 0.20 t-0.25 t, 0.21 t-0.24 t, 0.21 t-0.25 t or 0.22 t-0.25 t. Exemplarily, when the thickness of the chemically strengthened microcrystalline glass is 0.5 mm, DOL_0 of the chemically strengthened microcrystalline glass may be 0.100 mm, 0.105 mm, 0.110 mm, 0.112 mm, 0.113 mm, 0.114 mm, 0.115 mm, 0.116 mm, 0.117 mm, 0.118 mm, 0.119 mm, 0.120 mm, 0.121 mm, 0.122 mm, 0.123 mm, 0.124 mm or 0.125 mm, or may be a numerical value in a numerical range constituted by any two specific numerical values in the above as endpoints, as long as the chemically strengthened microcrystalline glass with desired performance in the present invention can be obtained. It should be understood that in specific embodiments, any of the above ranges can be combined with any other ranges, as long as the chemically strengthened microcrystalline glass with desired performance in the present invention can be obtained. DOL_0 of the chemically strengthened microcrystalline glass being in the above ranges indicates that the chemically strengthened microcrystalline glass has a large depth of the compression stress layer, which is more beneficial for it to offset energy driving crack propagation, thereby ensuring it to have excellent damage resistance and excellent deformation resistance.

In some embodiments of the present invention, the chemically strengthened microcrystalline glass has |CT_AV| of 85 MPa-200 MPa, where |CT_AV| is an absolute value of the average tensile stress. Optionally, |CT_AV| is 90 MPa-200 MPa. In some embodiments, the chemically strengthened microcrystalline glass has |CT_AV| of 85 MPa-200 MPa, 90 MPa-200 MPa, 90 MPa-180 MPa, 100 MPa-150 MPa, 130 MPa-180 MPa, 85 MPa-100 MPa, 85 MPa-120 MPa, 90 MPa-150 MPa, 95 MPa-180 MPa, 100 MPa-140 MPa, 130 MPa-200 MPa or 120 MPa-140 MPa. In some embodiments, the chemically strengthened microcrystalline glass has |CT_AV| of 85 MPa, 90 MPa, 100 MPa, 110 MPa, 120 MPa, 130 MPa, 140 MPa, 150 MPa, 160 MPa, 170 MPa, 180 MPa, 190 MPa or 200 MPa, or has |CT_AV| in a numerical range constituted by any two specific numerical values in the above as endpoints, as long as the chemically strengthened microcrystalline glass with desired performance in the present invention can be obtained. It should be understood that in specific embodiments, any of the above ranges can be combined with any other ranges, as long as the chemically strengthened microcrystalline glass with desired performance in the present invention can be obtained. |CT_AV| of the chemically strengthened microcrystalline glass being in the above ranges indicates that the chemically strengthened microcrystalline glass has a relatively high tensile stress level, reflecting that it has a relatively high surface stress level, and the relatively high surface compressive stress level can offset more remaining energy of drop, extrusion, impact or collision, further ensuring it to have excellent damage resistance and excellent deformation resistance.

In some embodiments of the present invention, the chemically strengthened microcrystalline glass has CT_LD of 50,000 MPa/mm-100,000 MPa/mm, where CT_LD is tensile stress linear density. Optionally, CT_LD is 55,000 MPa/mm-100,000 MPa/mm. In some embodiments, the chemically strengthened microcrystalline glass has CT_LD of 50,000 MPa/mm-100,000 MPa/mm, 55,000 MPa/mm-95,000 MPa/mm, 60,000 MPa/mm-90,000 MPa/mm, 65,000 MPa/mm-85,000 MPa/mm, 70,000 MPa/mm-80,000 MPa/mm, 65,000 MPa/mm-100,000 MPa/mm, 60,000 MPa/mm-80,000 MPa/mm or 60,000 MPa/mm-100,000 MPa/mm. In some embodiments, the chemically strengthened microcrystalline glass has CT_LD of 50,000 MPa/mm, 55,000 MPa/mm, 60,000 MPa/mm, 65,000 MPa/mm, 70,000 MPa/mm, 75,000 MPa/mm, 80,000 MPa/mm, 85,000 MPa/mm, 90,000 MPa/mm, 95,000 MPa/mm or 100,000 MPa/mm, or has CT_LD in a numerical range constituted by any two specific numerical values in the above as endpoints, as long as the chemically strengthened microcrystalline glass with desired performance in the present invention can be obtained. It should be understood that in specific embodiments, any of the above ranges can be combined with any other ranges, as long as the chemically strengthened microcrystalline glass with desired performance in the present invention can be obtained. CT_LD of the chemically strengthened microcrystalline glass being in the above ranges indicates that the tensile stress stored inside the chemically strengthened microcrystalline glass is relatively dense, demonstrating that the chemically strengthened microcrystalline glass has a relatively high surface stress level, further ensuring it to have excellent damage resistance and excellent deformation resistance.

In some embodiments of the present invention, the chemically strengthened microcrystalline glass has |CT_CV| of 120 MPa-320 MPa, optionally, the chemically strengthened microcrystalline glass has |CT_CV| of 135 MPa-300 MPa, and further optionally, the chemically strengthened microcrystalline glass has |CT_CV| of 160 MPa-300 MPa. |CT_CV| is an absolute value of a maximum tensile stress. In some embodiments, the chemically strengthened microcrystalline glass has |CT_CV| of 120 MPa-320 MPa, 135 MPa-300 MPa, 160 MPa-300 MPa, 170 MPa-285 MPa, 180 MPa-270 MPa, 120 MPa-250 MPa or 165 MPa-290 MPa. In some embodiments, the chemically strengthened microcrystalline glass has |CT_CV| of 120 MPa, 135 MPa, 150 MPa, 160 MPa, 170 MPa, 180 MPa, 190 MPa, 200 MPa, 210 MPa, 220 MPa, 230 MPa, 240 MPa, 250 MPa, 260 MPa, 270 MPa, 280 MPa, 290 MPa or 300 MPa, or has |CT_CV| in a numerical range constituted by any two specific numerical values in the above as endpoints, as long as the chemically strengthened microcrystalline glass with desired performance in the present invention can be obtained. It should be understood that in specific embodiments, any of the above ranges can be combined with any other ranges, as long as the chemically strengthened microcrystalline glass with desired performance in the present invention can be obtained. |CT_CV| of the chemically strengthened microcrystalline glass being in the above ranges indicates that the chemically strengthened microcrystalline glass has a relatively high tensile stress level, reflecting that it has relatively high surface stress level, and the relatively high surface compressive stress level can offset more remaining energy of drop, extrusion, impact or collision, thereby ensuring it to have excellent damage resistance and excellent deformation resistance.

In some embodiments of the present invention, Vickers hardness of the chemically strengthened microcrystalline glass is greater than or equal to 680 kgf/mm$^2$, and optionally, the Vickers hardness of the chemically strengthened microcrystalline glass is 700 kgf/mm$^2$-800 kgf/mm$^2$. In some embodiments, the chemically strengthened microcrystalline glass has Vickers hardness of 680 kgf/mm$^2$, 700 kgf/mm$^2$, 710 kgf/mm$^2$, 720 kgf/mm$^2$, 730 kgf/mm$^2$, 740 kgf/mm$^2$, 750 kgf/mm$^2$, 760 kgf/mm$^2$, 770 kgf/mm$^2$, 780 kgf/mm$^2$, 790 kgf/mm$^2$ or 800 kgf/mm$^2$, or has Vickers hardness in a numerical range constituted by any two specific numerical values in the above as endpoints, as long as the chemically strengthened microcrystalline glass with desired performance in the present invention can be obtained. It should be understood that in specific embodiments, any of the above ranges can be combined with any other ranges, as long as the chemically strengthened microcrystalline glass with desired performance in the present invention can be obtained. The Vickers hardness of the chemically strengthened microcrystalline glass being in the above ranges indicates that the chemically strengthened microcrystalline glass has high hardness, further ensuring it to have an excellent mechanical performance.

In the present invention, those skilled in the art can select the thickness of the microcrystalline glass or the chemically strengthened microcrystalline glass according to requirements. Exemplarily, the thickness of the microcrystalline glass or the chemically strengthened microcrystalline glass may be, for example, 0.2 mm-5 mm, 0.2 mm-2.0 mm, 0.2 mm-0.8 mm, 0.4 mm-0.6 mm or 0.2 mm-0.7 mm.

In the present invention, by enabling the chemically strengthened microcrystalline glass to satisfy specific composition and stress characteristics, the chemically strengthened microcrystalline glass can be ensured to have excellent physical strength performance, excellent mechanical strength performance, excellent damage resistance and excellent deformation resistance.

In some embodiments of the present invention, when the thickness of the chemically strengthened microcrystalline glass is 0.5 mm, a center of a main surface of the chemically strengthened microcrystalline glass is extruded by a round-head metal compression rod with a diameter of 10 mm. When the center of the main surface of the chemically strengthened microcrystalline glass is extruded by a load of 10 kgf, a deformation amount of a loaded position of the chemically strengthened microcrystalline glass to a loading direction is ≤ 0.850 mm. Upon extrusion on the chemically strengthened microcrystalline glass, a smaller deformation amount generated indicates more excellent deformation resistance thereof, and upon extrusion or impact when it is used as cover glass of a display screen, the deformation is smaller, and the probability of contact with an inner glass screen also becomes smaller, which is beneficial to address the problem of failure of the inner glass screen caused by the impact on the cover glass. In some embodiments, when the chemically strengthened microcrystalline glass has the thickness of 0.5 mm and the center of the main surface of the chemically strengthened microcrystalline glass is extruded by a load of 10 kgf, the deformation amount of a loaded position of the chemically strengthened microcrystalline glass to a loading direction may be 0.806 mm, 0.804 mm, 0.787 mm, 0.828 mm, 0.798 mm, 0.827 mm, 0.814 mm, 0.758 mm, 0.805 mm, 0.779 mm, 0.816 mm, 0.788 mm, 0.823 mm, 0.796 mm, 0.782 mm, 0.764 mm or 0.850 mm, or may be a numerical value not more than any of the above specific numerical values, or may be a numerical value in a numerical range constituted by any two specific numerical values in the above as endpoints.

In some embodiments of the present invention, when the thickness of the chemically strengthened microcrystalline glass is 0.5 mm, a center of a main surface of the chemically strengthened microcrystalline glass is extruded by a round-head metal compression rod with a diameter of 10 mm. When a deformation amount of 0.400 mm occurs along the loading direction at the center of the main surface of the chemically strengthened microcrystalline glass, the load borne at the center of the main surface of the chemically strengthened microcrystalline glass is ≥ 30 N. When a certain deformation amount occurs, if the chemically strengthened microcrystalline glass can bear a larger load, when the chemically strengthened microcrystalline glass is subjected to extrusion or impact, the deformation generated thereby can offset a larger load, and thus when it is deformed and comes into contact with the inner glass screen, the inner glass screen is subjected to a smaller extrusion or impact load, and the possibility of failure of the inner glass screen will be reduced. Using the chemically strengthened microcrystalline glass capable of bearing or offsetting a relatively large load as the cover glass facilitates addressing the problem of failure of the inner glass screen caused by the impact or extrusion on the cover glass. In some embodiments, when the thickness of the chemically strengthened microcrystalline glass is 0.5 mm, a center of a main surface of the chemically strengthened microcrystalline glass is extruded by a round-head metal compression rod with a diameter of 10 mm. When the center of the main surface of the chemically strengthened microcrystalline glass has a deformation amount of 0.400 mm in a loading direction, the load borne by the center of the main surface of the chemically strengthened microcrystalline glass may be 36.9 N, 38.6 N, 38.5 N, 33.8 N, 37.2 N, 34.9 N, 37.4 N, 39.2 N, 38.1 N, 37.6 N, 38.7 N, 37.8 N, 38.4 N, 39.4 N or 40.0 N, or may be a numerical value not less than any of the above specific numerical values, or may be a numerical value in a numerical range constituted by any two specific numerical values in the above as endpoints.

The chemically strengthened microcrystalline glass of the present invention can be obtained by performing the chemical strengthening treatment on the preceding microcrystalline glass. A chemical strengthening process can be carried out with reference to processes in the prior art, as long as the chemically strengthened microcrystalline glass with desired performance in the present invention can be obtained. For example, it may include, but is not limited to: firstly, heating a molten salt containing a certain sodium ion concentration to a temperature required for the chemical strengthening, then, preheating the microcrystalline glass (during the preheating, a heating rate of 5 °C/min-100 °C/min can be used, for example) to a required chemical strengthening temperature, and then placing the same into the molten salt, performing treatment at a constant temperature for a duration required by the chemical strengthening, taking out the same, cooling to a room temperature, washing off salt remaining on a surface, and drying to obtain the chemically strengthened microcrystalline glass having a high stress level and excellent deformation resistance.

In some embodiments of the present invention, a temperature of a molten salt bath used for the chemical strengthening treatment may be 380 °C-550 °C, and the duration of the chemical strengthening treatment may be 0.5 h-24 h, as long as the chemically strengthened microcrystalline glass with desired performance in the present invention can be obtained.

In some embodiments of the present invention, in terms of mass ratio, ingredients of the molten salt include 5 wt%-50 wt% of a sodium salt, 50-95 wt% of a potassium salt and 0.01-0.30 wt% of a lithium salt. Further, selected sodium salt, potassium salt, and lithium salt each independently can be nitrate, sulfate, phosphate or carbonate, or the like, as long as the chemically strengthened microcrystalline glass with desired performance in the present invention can be obtained. In some embodiments, when cooling the chemically strengthened microcrystalline glass after completion of the chemical strengthening treatment, the cooling rate may be 1 °C/min-50 °C/min.

In the present invention, the chemically strengthened microcrystalline glass prepared from the preceding microcrystalline glass having high strength and transparency has excellent drop damage resistance while having excellent deformation resistance. When the chemically strengthened microcrystalline glass is used as cover glass for an electronic device, not only can it be ensured that the cover glass of the electronic device is difficult to break, but also the damage or failure of an inner screen caused by impact on the inner screen when the cover glass is extruded or impacted can be effectively avoided, thereby being able to ensure better protection to the inner screen.

The microcrystalline glass or the chemically strengthened microcrystalline glass having an excellent mechanical strength performance, excellent deformation resistance and transparency provided by the present invention can be used for electronic devices, including, but not limited to, mobile phones, tablet computers, handheld game consoles, portable digital devices (such as digital cameras), vehicle-mounted dashboards, electronic whiteboard glass, intelligent home, can also be used in vehicles, aerocrafts or aircrafts, and can also be used in any glass device requiring microcrystalline glass. For example, they can be used for display screens, cover glass, touch screens, inner glass screens, inner frames, or the like of electronic devices. For example, they can be used for windshields of vehicles, aerocrafts or aircrafts, such as front windshields or side windshields. For example, they can be used for countertops, other surfaces, appliance doors, floor tiles, wall panels, storage containers, etc. Other surfaces may include, but are not limited to, exterior wall surfaces, stair tread surfaces, pillar facings or counter surfaces, etc. Storage containers may include, but are not limited to, cups, plates, vials, beverage bottles, or the like.

Examples of the present invention described in detail below are illustrative, merely used for explaining the present invention, but should not be construed as limitation to the present invention.

In example numbers in following tables: S refers to example, for example, S1 refers to Example 1; and D refers to comparative example, for example, D1 refers to Comparative Example 1.

Example 1

(1) Preparation of Base glass:

Raw materials of a total mass of 1,000 g were prepared (the raw materials were prepared according to a formulation of S1 in Table 1, and proportions of various oxides are as listed in Table 2). 5 g of sodium chloride was added to the prepared raw materials. Mixture was mixed in a V-type mixer at a rotational speed of 25 r/min for 30 min, and melted in a platinum crucible at 1,650 °C for 5 h. Afterwards, resultant was poured into a mold to be formed into a glass brick, which was cooled to 900 °C, then annealed in a 460 °C annealing furnace for 12 h, followed by cooling with furnace to a room temperature, so as to obtain a base glass brick.

(2) Preparation of microcrystalline glass: the base glass brick was put in the crystallization furnace, heated from the room temperature to 525 °C at a heating rate of 10 °C/min, subjected to a nucleation treatment for 240 min while being held at this temperature, then heated to 685 °C at the heating rate of 10 °C/min, subjected to a crystallization treatment for 60 min while being held at this temperature, and then cooled to the room temperature at a cooling rate of 1 °C/min, so as to obtain a microcrystalline glass sample brick. In terms of molar percentage of oxides, a composition of the prepared microcrystalline glass was identical to that of the base glass, as detailed in Table 1-Table 2.

The microcrystalline glass sample brick obtained was subjected to cutting, CNC machining (CNC instrument model used in the present invention being RCG500S), and polishing in sequence, to obtain microcrystalline glass samples meeting demanded specification and requirements. In the present invention, the microcrystalline glass sample brick was subjected to the preceding cold-working treatments to fabricate the microcrystalline glass samples with a thickness of 0.50 mm. Specifically, microcrystalline glass polished sheet samples of 50 mm × 50 mm × 0.5 mm were fabricated.

The microcrystalline glass obtained in S1 was tested.

Primary crystalline phase, crystallinity, average crystal size, expansion softening point, density, refractive index, and Young's modulus of the microcrystalline glass and optical b value and transmittance (under light with a wavelength of 550 nm) of the microcrystalline glass samples with the thickness of 0.5 mm were respectively tested, and results are respectively listed in Table 3.

(3) Preparation of chemically strengthened microcrystalline glass: obtained microcrystalline glass samples were preheated in a strengthening furnace cavity for 5 min. Preheated samples were quickly put into a 450 °C molten salt to undergo chemical strengthening, where composition of the molten salt included 29.99 wt% $NaNO_3$ + 69.98 wt% $KNO_3$ + 0.03 wt% $LiNO_3$. After 21.0 h of the chemical strengthening, the glass samples were taken out, slowly cooled on a strengthening furnace body to the room temperature, and then washed off salt wrapped on a glass surface with clear water, followed by drying the glass samples, so as to obtain the chemically strengthened microcrystalline glass.

The chemically strengthened microcrystalline glass obtained in S1 was tested.

I. |CT_CV|, DOL_0, and |CT_AV| of the chemically strengthened microcrystalline glass were tested by an SLP 2000 stressmeter (employing a light source wavelength of 518 nm, SOC = 25.5 (nm/cm)/MPa, setting the refractive index according to a refractive index value of the microcrystalline glass samples, the refractive index of the microcrystalline glass samples in S1 being 1.5600, and exposure duration being 300 μsec); and then a value of the tensile stress linear density (CT_LD) was calculated, with results as listed in Table 4.

II. Vickers hardness of the chemically strengthened microcrystalline glass was tested, and results are listed in Table 4.

III. Deformation resistance of the chemically strengthened microcrystalline glass was tested, for example, deformation amounts of the chemically strengthened microcrystalline glass under a load of 10 kgf; and loads borne by the chemically strengthened microcrystalline glass with the deformation amount of 0.40 mm, and results are listed in Table 4.

Example 2-Example 18

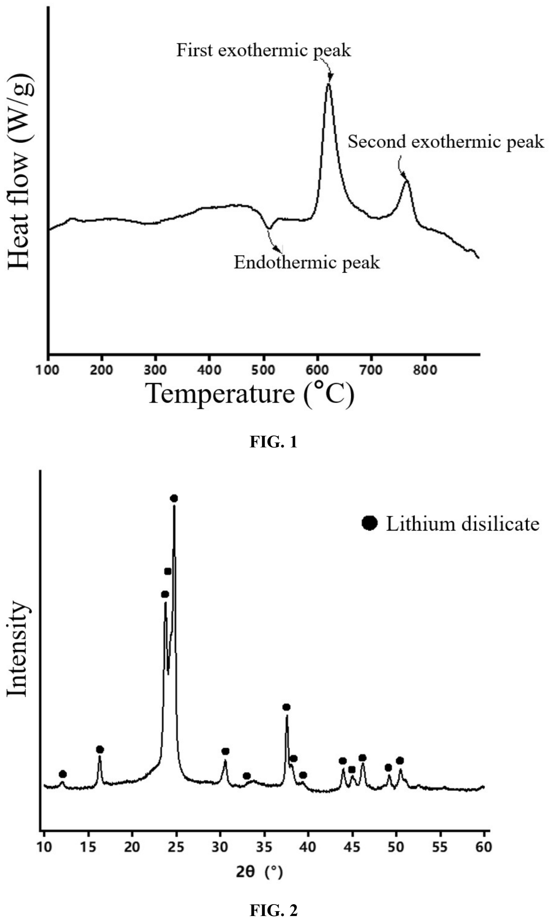

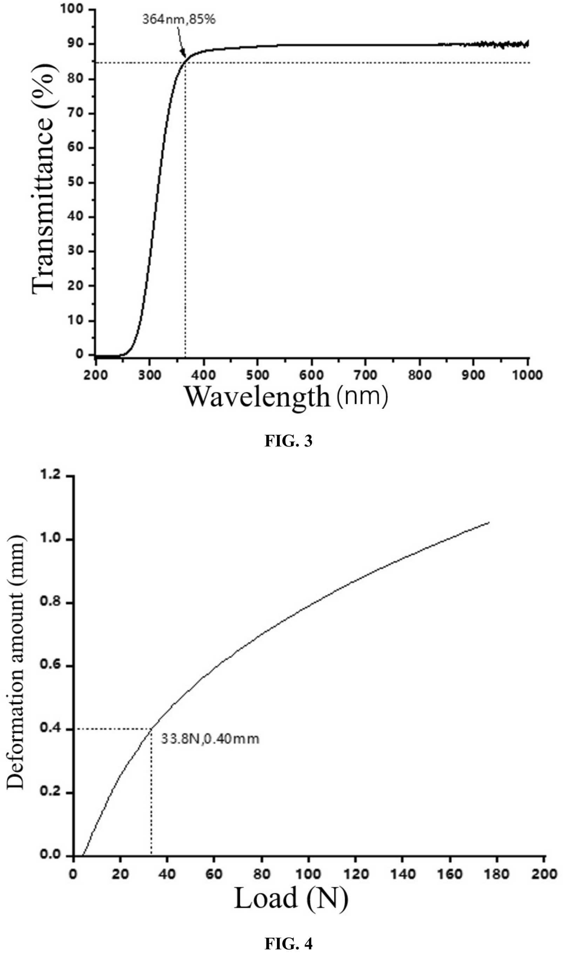

They were respectively carried out with reference to Example 1, and different raw material compositions, different process parameters and corresponding test results of various examples are listed in Table 1 to Table 4, respectively.
Herein, a DSC plot of the base glass of Example 3 is shown in FIG. 1, and a heat treatment process used for preparing the microcrystalline glass from the base glass can be determined with reference to the drawing.
An XRD spectrum of the microcrystalline glass of Example 3 is shown in FIG. 2, and it can be seen from the drawing that the primary crystalline phase of the microcrystalline glass is a lithium disilicate crystalline phase.
A curve graph of transmittance of the microcrystalline glass of Example 3 is shown in FIG. 3, from which drawing it can be seen that the microcrystalline glass is transparent in the visible light range and has a high transmittance.
A load-deformation curve graph of the chemically strengthened microcrystalline glass of Example 3 is shown in FIG. 4, and deformation amounts of the chemically strengthened microcrystalline glass extruded under different loads and loads borne by the chemically strengthened microcrystalline glass at different deformation amounts can be seen from the drawing.

Comparative Example 1-Comparative Example 8

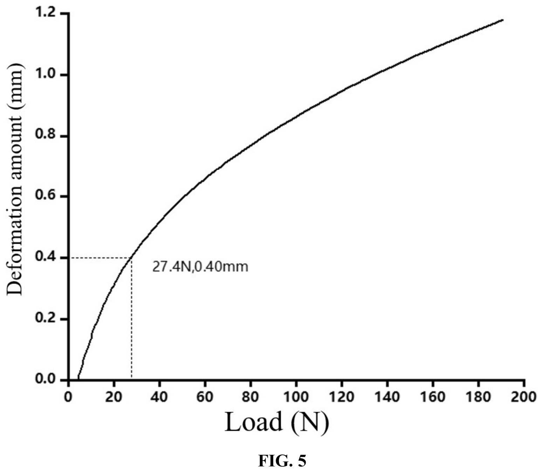

They were respectively carried out with reference to Example 1, and different raw material compositions, different process parameters and corresponding test results of various comparative examples are listed in Table 5 to Table 8, respectively.
A load-deformation curve graph of the chemically strengthened microcrystalline glass of Comparative Example 3 is shown in FIG. 5.
Test for upper limit temperature of crystal precipitation: in order to analyze industrial mass production of the microcrystalline glass of the present invention, the upper limit temperatures of crystal precipitation of the base glass in some examples were tested, where the upper limit temperature of crystal precipitation of the base glass in S3 was 1067.2 °C, and the upper limit temperature of crystal precipitation of the base glass in S4 was 1053.5 °C, both lower than 1100 °C, and the upper limit temperatures of crystal precipitation were 1000 °C-1100 °C, indicating that the microcrystalline glass of the present invention is beneficial for industrial mass production.
Test for expansion softening point: in order to analyze the 3D hot bending effect of the microcrystalline glass of the present invention, the expansion softening points of the microcrystalline glass in some examples were tested, as detailed in Table 3. It can be seen from the test results that the expansion softening points of the microcrystalline glass of the present invention were all lower than 830 °C, being 750 °C-850 °C, indicating that the microcrystalline glass of the present invention is adapted to 3D hot bending forming to prepare the 3D curved microcrystalline glass.

Table 1

| Composition (mol) | S1 | S2 | S3 | S4 | S5 | S6 | S7 | S8 | S9 | S10 | S11 | S12 | S13 | S14 | S15 | S16 | S17 | S18 |
|---|---|---|---|---|---|---|---|---|---|---|---|---|---|---|---|---|---|---|
| $SiO_2$ | 62.55 % | 62.58 % | 61.82 % | 61.72 % | 61.87 % | 61.76 % | 62.59 % | 61.15 % | 61.25 % | 61.06 % | 63.17 % | 62.77 % | 63.39 % | 63.17 % | 63.16 % | 62.01 % | 61.72 % | 61.15 % |
| $Al_2O_3$ | 1.55 % | 0.00 % | 1.40 % | 1.38 % | 1.41 % | 1.40 % | 1.40 % | 1.37 % | 1.39 % | 1.38 % | 0.00 % | 1.43 % | 1.23 % | 1.42 % | 1.42 % | 1.39 % | 1.38 % | 1.37 % |
| $P_2O_5$ | 2.06 % | 1.87 % | 1.86 % | 1.85 % | 1.88 % | 1.86 % | 1.87 % | 1.83 % | 1.85 % | 1.85 % | 1.89 % | 1.74 % | 1.51 % | 1.89 % | 1.89 % | 1.85 % | 1.85 % | 1.83 % |
| $ZrO_2$ | 2.58 % | 4.68 % | 4.66 % | 4.61 % | 3.16 % | 3.72 % | 4.21 % | 4.57 % | 5.10 % | 5.54 % | 4.72 % | 2.18 % | 2.36 % | 2.36 % | 3.31 % | 4.63 % | 4.61 % | 4.57 % |
| $MgO$ | 0.00 % | 1.34 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % |
| $ZnO$ | 0.00 % | 0.00 % | 0.00 % | 0.00 % | 0.00 % | 0.00 % | 0.00 % | 0.00 % | 0.00 % | 0.00 % | 0.00 % | 1.67 % | 0.00 % | 0.00 % | 0.00 % | 0.00 % | 0.00 % | 0.00 % |
| $Na_2O$ | 0.00 % | 0.00 % | 0.00 % | 0.00 % | 2.60 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % |
| $K_2O$ | 0.00 % | 0.00 % | 0.00 % | 0.00 % | 0.00 % | 0.00 % | 0.00 % | 0.00 % | 0.00 % | 0.00 % | 0.92 % | 0.00 % | 0.00 % | 0.00 % | 0.00 % | 0.00 % | 0.00 % | 0.00 % |
| $Li_2O$ | 27.54 % | 28.59 % | 29.80 % | 29.52 % | 29.08 % | 29.80 % | 29.93 % | 29.25 % | 29.66 % | 29.52 % | 29.30 % | 27.54 % | 31.51 % | 30.22 % | 30.22 % | 29.66 % | 29.52 % | 29.25 % |
| $CaO$ | 3.72 % | 0.94 % | 0.00 % | 0.92 % | 0.00 % | 0.93 % | 0.00 % | 1.83 % | 0.00 % | 0.00 % | 0.00 % | 2.67 % | 0.00 % | 0.94 % | 0.00 % | 0.00 % | 0.00 % | 0.00 % |
| $B_2O_3$ | 0.00 % | 0.00 % | 0.00 % | 0.00 % | 0.00 % | 0.00 % | 0.00 % | 0.00 % | 0.00 % | 0.65 % | 0.00 % | 0.00 % | 0.00 % | 0.00 % | 0.00 % | 0.00 % | 0.00 % | 0.00 % |
| $Y_2O_3$ | 0.00 % | 0.00 % | 0.00 % | 0.00 % | 0.00 % | 0.53 % | 0.00 % | 0.00 % | 0.75 % | 0.00 % | 0.00 % | 0.00 % | 0.00 % | 0.00 % | 0.00 % | 0.00 % | 0.00 % | 0.00 % |
| $La_2O_3$ | 0.00 % | 0.00 % | 0.46 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % |
| $Ta_2O_5$ | 0.00 % | 0.00 % | 0.46 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % |
| $SrO$ | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.00 % | 0.46 % | 0.92 % | 1.83 % |

Note: In Table 1, an oxide content of "0.00%" means that the component was not actively or intentionally added to a glass composition in an initial batching process, but the component may be present as an impurity.

Table 2

| Proportions of Various Oxides | S1 | S2 | S3 | S4 | S5 | S6 | S7 | S8 | S9 | S10 | S11 | S12 | S13 | S14 | S15 | S16 | S17 | S18 |
|---|---|---|---|---|---|---|---|---|---|---|---|---|---|---|---|---|---|---|
| $SiO_2/Li_2O$ | 2.27 | 2.19 | 2.07 | 2.09 | 2.13 | 2.07 | 2.09 | 2.09 | 2.07 | 2.07 | 2.16 | 2.28 | 2.01 | 2.09 | 2.09 | 2.09 | 2.09 | 2.09 |
| $SiO_2+Li_2O$ | 90.0 9% | 91.1 7% | 91.6 2% | 91.2 4% | 90.9 5% | 91.5 6% | 92.5 2% | 90.4 0% | 90.9 1% | 90.5 8% | 92.4 7% | 90.3 1% | 94.9 0% | 93.3 9% | 93.3 8% | 91.6 7% | 91.2 4% | 90.4 0% |
| $ZrO_2/(CaO+ZrO_2+Al_2O_3)$ | 0.33 | 0.83 | 0.77 | 0.67 | 0.69 | 0.61 | 0.75 | 0.59 | 0.79 | 0.80 | 1.00 | 0.35 | 0.66 | 0.50 | 0.70 | 0.77 | 0.77 | 0.77 |
| $CaO+Al_2O_3$ | 5.27 % | 0.94 % | 1.40 % | 2.30 % | 1.41 % | 2.33 % | 1.40 % | 3.20 % | 1.39 % | 1.38 % | 0.00 % | 4.10 % | 1.23 % | 2.36 % | 1.42 % | 1.39 % | 1.38 % | 1.37 % |
| $(CaO+Al_2O_3)/Li_2O$ | 0.19 | 0.03 | 0.05 | 0.08 | 0.05 | 0.08 | 0.05 | 0.11 | 0.05 | 0.05 | 0.00 | 0.15 | 0.04 | 0.08 | 0.05 | 0.05 | 0.05 | 0.05 |
| $ZrO_2/(100\%-3\times Li_2O)$ | 0.15 | 0.33 | 0.44 | 0.40 | 0.25 | 0.35 | 0.41 | 0.37 | 0.46 | 0.48 | 0.39 | 0.13 | 0.43 | 0.25 | 0.35 | 0.42 | 0.40 | 0.37 |
| $ZrO_2/SiO_2$ | 0.041 | 0.075 | 0.075 | 0.075 | 0.051 | 0.060 | 0.067 | 0.075 | 0.083 | 0.091 | 0.075 | 0.035 | 0.037 | 0.037 | 0.052 | 0.075 | 0.075 | 0.075 |
| $(ZrO_2-Na_2O)/(-SiO_2-2\times Li_2O)$ | 0.35 | 0.87 | 2.10 | 1.72 | 0.15 | 1.72 | 1.54 | 1.72 | 2.64 | 2.74 | 1.03 | 0.28 | 6.38 | 0.86 | 1.22 | 1.72 | 1.72 | 1.72 |
| $Na_2O/SiO_2$ | 0.00 | 0.00 | 0.00 | 0.00 | 0.04 | 0.00 | 0.00 | 0.00 | 0.00 | 0.00 | 0.00 | 0.00 | 0.00 | 0.00 | 0.00 | 0.00 | 0.00 | 0.00 |
| $Al_2O_3/SiO_2$ | 0.02 5 | 0.00 0 | 0.02 3 | 0.02 2 | 0.02 3 | 0.02 3 | 0.02 2 | 0.02 2 | 0.02 3 | 0.02 3 | 0.00 0 | 0.02 3 | 0.01 9 | 0.02 2 | 0.02 2 | 0.02 2 | 0.02 2 | 0.02 2 |

Note: In Table 2, content percentages of oxides in molar percentage were put into various equations. Exemplarily, the content of $Al_2O_3$ in molar percentage was 2%, and then 2% was put into equations for calculation.

Table 3

| Microcrystalline Glass | S1 | S2 | S3 | S4 | S5 | S6 | S7 | S8 | S9 | S10 | S11 | S12 | S13 | S14 | S15 | S16 | S17 | S18 |
|---|---|---|---|---|---|---|---|---|---|---|---|---|---|---|---|---|---|---|
| Upper Limit Temperature of Crystal Precipitation (°C) | / | / | 1067.2 | 1053.5 | / | / | / | / | / | / | / | / | / | / | / | / | / | / |
| Nucleation Temperature (°C) | 525 | 520 | 520 | 520 | 520 | 535 | 530 | 540 | 540 | 540 | 520 | 520 | 520 | 520 | 520 | 520 | 520 | 525 |
| Nucleation Isothermal Duration (h) | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| Crystallization Temperature (°C) | 685 | 720 | 710 | 690 | 735 | 715 | 730 | 700 | 730 | 740 | 715 | 670 | 710 | 690 | 680 | 690 | 690 | 700 |
| Crystallization Isothermal Duration (h) | 1.0 | 1.5 | 1.0 | 1.5 | 1.0 | 1.5 | 1.0 | 1.5 | 1.5 | 1.5 | 1.5 | 1.0 | 1.0 | 1.0 | 1.5 | 1.5 | 1.5 | 1.5 |
| Primary crystalline phase | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate |
| Crystallinity | 73.3 % | 70.1 % | 76.7 % | 76.6 % | 80.4 % | 79.5 % | 79.1 % | 74.3 % | 75.1 % | 74.4 % | 70.5 % | 76.8 % | 80.4 % | 79.5 % | 78.3 % | 73.5 %% | 72.1 % | 70.4 % |
| Average Crystal Size (nm) | 20.2 | 25.6 | 22.8 | 23.0 | 19.7 | 20.1 | 23.3 | 26.8 | 25.7 | 28.5 | 26.8 | 19.6 | 19.5 | 20.4 | 21.0 | 18.7 | 22.2 | 25.6 |
| Optical b Value at Thickness of 0.5 mm | 0.39 | 0.59 | 0.56 | 0.41 | 0.48 | 0.32 | 0.5 | 0.76 | 0.58 | 0.79 | 0.69 | 0.30 | 0.32 | 0.41 | 0.31 | 0.35 | 0.44 | 0.60 |
| Transmittance at Thickness of 0.5 mm (light with wavelength of 550 nm) | 90.74 % | 90.47 % | 90.40 % | 90.46 % | 90.71 % | 90.74 % | 90.61 % | 90.22 % | 90.37 % | 90.16 % | 90.33 % | 91.00 % | 90.94 % | 90.76 % | 90.87 % | 90.57 % | 90.44 % | 90.35 % |
| Expansion Softening Point (°C) | / | / | 797 | 796 | 810.5 | 792 | / | 777 | / | / | / | / | 826 | / | / | / | 778.3 | / |

(continued)

| Microcrystalline Glass | S1 | S2 | S3 | S4 | S5 | S6 | S7 | S8 | S9 | S10 | S11 | S12 | S13 | S14 | S15 | S16 | S17 | S18 |
|---|---|---|---|---|---|---|---|---|---|---|---|---|---|---|---|---|---|---|
| Density (g/cm$^3$) | 2.554 7 | 2.572 3 | 2.569 5 | 2.582 6 | 2.548 5 | 2.578 5 | 2.557 6 | 2.585 8 | 2.570 4 | 2.588 0 | 2.565 0 | 2.538 5 | 2.510 6 | 2.514 1 | 2.530 3 | 2.587 2 | 2.611 2 | 2.638 5 |
| Refractive Index | 1.560 0 | 1.569 5 | 1.567 0 | 1.570 0 | 1.561 0 | 1.569 5 | 1.562 0 | 1.572 0 | 1.568 5 | 1.573 0 | 1.564 5 | 1.559 0 | 1.553 5 | 1.557 5 | 1.560 5 | 1.569 0 | 1.570 5 | 1.575 5 |
| Young's Modulus (GPa) | 114.5 42 | 116.7 14 | 117.0 73 | 114.2 74 | 115.2 33 | 114.6 20 | 115.9 52 | 119.0 38 | 116.6 54 | 116.2 43 | 117.4 57 | 115.6 30 | 116.5 20 | 115.0 23 | 115.7 32 | 115.8 74 | 116.0 47 | 118.9 53 |

Note: In Table 3, "/" means not tested.

Table 4

| Chemically Strengthened Microcrystalline Glass | S1 | S2 | S3 | S4 | S5 | S6 | S7 | S8 | S9 | S10 | S11 | S12 | S13 | S14 | S15 | S16 | S17 | S18 |
|---|---|---|---|---|---|---|---|---|---|---|---|---|---|---|---|---|---|---|
| Strengthening Temperature (°C) | 450 | 450 | 450 | 450 | 450 | 450 | 450 | 450 | 450 | 450 | 450 | 450 | 450 | 450 | 450 | 450 | 450 | 450 |
| Strengthening Duration (h) | 21.0 | 8.0 | 7.0 | 10.5 | 9.0 | 12.5 | 7.0 | 12.0 | 6.5 | 6.5 | 8.0 | 13.0 | 9.0 | 10.0 | 8.0 | 7.5 | 12.5 | 15.0 |
| Salt Bath Proportion | 29.99 wt%NaNO$_3$+69.98 wt%KNO$_3$+0.03 wt%LiNO$_3$ | | | | | | | | | | | | | | | | | |
| \|CT_CV\| (MPa) | 144.84 | 203.32 | 205.35 | 229.38 | 150.42 | 170.89 | 174.19 | 225.84 | 204.74 | 226.85 | 170.55 | 143.57 | 155.78 | 170.37 | 176.29 | 230.70 | 280.56 | 279.58 |
| DOL_0 (µm) | 112.32 | 113.4 | 114.83 | 114.86 | 117.2 | 116.7 | 117.3 | 116.4 | 114.2 | 116.8 | 112.4 | 112.41 | 108.82 | 114.9 | 115.86 | 115.20 | 112.70 | 110.70 |
| \|CT_AV\| (MPa) | 96.6 | 140.6 | 136.66 | 143.32 | 102.4 | 125.4 | 121.4 | 150.3 | 139.2 | 149.9 | 120.4 | 93.8 | 102.98 | 112.5 | 115.1 | 157.20 | 160.40 | 164.80 |
| CT_LD (MPa/mm) | 53199.55 | 76823.84 | 73889.33 | 77473.06 | 54378 | 66869 | 64439 | 80320 | 75613 | 79840 | 66268 | 51623.77 | 58154.87 | 60795.00 | 61758.06 | 84762.24 | 88091.68 | 91826.56 |
| Vickers Hardness, kgf/mm² | 706 | 712 | 734 | 737 | 724 | 716 | 719 | 743 | 723 | 719 | 710 | 721 | 740 | 726 | 724 | 744 | 750 | 742 |
| Borne Load/N with Deformation Amount of 0.40 mm | 36.9 | 38.6 | 38.5 | 33.8 | 37.2 | 34.9 | 37.4 | 39.2 | 38.1 | 37.6 | 38.5 | 37.2 | 38.7 | 36.9 | 37.8 | 38.4 | 38.7 | 39.4 |
| Deformation Amount (mm) under Load of 10 kgf | 0.806 | 0.804 | 0.787 | 0.828 | 0.798 | 0.827 | 0.814 | 0.758 | 0.805 | 0.814 | 0.779 | 0.816 | 0.788 | 0.823 | 0.806 | 0.796 | 0.782 | 0.764 |

Table 5

| Composition (mol) | D1 | D2 | D3 | D4 | D5 | D6 | D7 | D8 |
|---|---|---|---|---|---|---|---|---|
| $SiO_2$ | 59.70% | 63.77% | 60.96% | 61.58% | 61.73% | 61.21% | 61.42% | 66.48% |
| $Al_2O_3$ | 1.50% | 1.43% | 1.50% | 1.52% | 1.47% | 1.30% | 1.38% | 1.38% |
| $P_2O_5$ | 2.10% | 1.91% | 2.00% | 2.02% | 1.96% | 1.85% | 1.84% | 1.84% |
| $ZrO_2$ | 3.40% | 2.38% | 2.50% | 2.53% | 2.45% | 6.12% | 2.30% | 2.30% |
| MgO | 0.00% | 0.00% | 0.00% | 0.00% | 0.00% | 0.00% | 0.00% | 0.00% |
| ZnO | 0.00% | 0.00% | 0.00% | 0.00% | 0.00% | 0.00% | 0.00% | 0.00% |
| $Na_2O$ | 1.00% | 0.00% | 1.00% | 0.00% | 0.98% | 0.00% | 0.00% | 0.00% |
| $K_2O$ | 0.00% | 0.00% | 0.00% | 0.00% | 0.00% | 0.00% | 0.00% | 0.00% |
| $Li_2O$ | 25.90% | 25.17% | 26.43% | 26.69% | 25.91% | 29.52% | 31.06% | 26.00% |
| CaO | 6.40% | 5.34% | 5.61% | 5.66% | 5.50% | 0.00% | 2.00% | 2.00% |
| $B_2O_3$ | 0.00% | 0.00% | 0.00% | 0.00% | 0.00% | 0.00% | 0.00% | 0.00% |
| $Y_2O_3$ | 0.00% | 0.00% | 0.00% | 0.00% | 0.00% | 0.00% | 0.00% | 0.00% |
| $La_2O_3$ | 0.00% | 0.00% | 0.00% | 0.00% | 0.00% | 0.00% | 0.00% | 0.00% |
| $Ta_2O_5$ | 0.00% | 0.00% | 0.00% | 0.00% | 0.00% | 0.00% | 0.00% | 0.00% |
| SrO | 0.00% | 0.00% | 0.00% | 0.00% | 0.00% | 0.00% | 0.00% | 0.00% |

Note: In Table 5, an oxide content of "0.00%" means that the component was not actively or intentionally added to a glass composition in an initial batching process, but the component may be present as an impurity.

Table 6

| Proportions of Various Oxides | D1 | D2 | D3 | D4 | D5 | D6 | D7 | D8 |
|---|---|---|---|---|---|---|---|---|
| $SiO_2/Li_2O$ | 2.31 | 2.53 | 2.31 | 2.31 | 2.38 | 2.07 | 1.98 | 2.56 |
| $SiO_2+Li_2O$ | 85.60% | 88.94% | 87.39% | 88.27% | 87.64% | 90.73% | 92.48% | 92.48% |
| $ZrO_2/(CaO+ZrO_2+Al_2O_3)$ | 0.30 | 0.26 | 0.26 | 0.26 | 0.26 | 0.82 | 0.40 | 0.40 |
| $CaO+Al_2O_3$ | 7.90% | 6.77% | 7.11% | 7.18% | 6.97% | 1.30% | 3.38% | 3.38% |
| $(CaO+Al_2O_3)/Li_2O$ | 0.31 | 0.27 | 0.27 | 0.27 | 0.27 | 0.04 | 0.11 | 0.13 |
| $ZrO_2/(100\%-3\times Li_2O)$ | 0.15 | 0.10 | 0.12 | 0.13 | 0.11 | 0.53 | 0.34 | 0.10 |
| $ZrO_2/SiO_2$ | 0.057 | 0.037 | 0.041 | 0.041 | 0.040 | 0.100 | 0.037 | 0.035 |
| $(ZrO_2-Na_2O)/(SiO_2-2\times Li_2O)$ | 0.30 | 0.18 | 0.19 | 0.31 | 0.15 | 2.82 | -3.29 | 0.16 |
| $Na_2O/SiO_2$ | 0.02 | 0.00 | 0.02 | 0.00 | 0.02 | 0.00 | 0.00 | 0.00 |
| $Al_2O_3/SiO_2$ | 0.025 | 0.022 | 0.025 | 0.025 | 0.024 | 0.021 | 0.022 | 0.021 |

Note: In Table 6, content percentages of oxides in molar percentage were put into various equations, that is, molar unit was not involved in calculation in the equations. Exemplarily, the content of $Al_2O_3$ in molar percentage was 2%, and then 2% was put into equations for calculation.

Table 7

| Microcrystalli ne Glass | D1 | D2 | D3 | D4 | D5 | D6 | D7 | D8 |
|---|---|---|---|---|---|---|---|---|
| Nucleation Temperature (°C) | 525 | 520 | 515 | 520 | 515 | 520 | 520 | 520 |
| Nucleation Isothermal Duration (h) | 4.0 | 4.0 | 4.0 | 4.0 | 4.0 | 4.0 | 4.0 | 4.0 |

(continued)

| Microcrystalli ne Glass | D1 | D2 | D3 | D4 | D5 | D6 | D7 | D8 |
|---|---|---|---|---|---|---|---|---|
| Crystallization Temperature (°C) | 690.00 | 680.00 | 685.00 | 680.00 | 675.00 | 690 | 700 | 700 |
| Crystallization Isothermal Duration (h) | 1.00 | 1.00 | 1.00 | 1.00 | 1.00 | 1.00 | 1.00 | 1.50 |
| Primary crystalline phase | Lithium disilicate | Lithium disilicate | Lithium disilicate | Lithium disilicate | Lithium disilicate | Lithium disilicate | Lithium disilicate | Lithium d isilicate |
| Crystallinity | 70.8% | 68.5% | 72.6% | 72.5% | 70.3% | 75.6% | 73.60% | 69.03% |
| Average Crystal Size (nm) | 40.4 | 25.8 | 39.4 | 30.6 | 36.6 | 33.9 | 35.6 | 24.542 |
| Optical b Value at Thickness of 0.5 mm | 11.52 | 0.68 | 4.65 | 1.546 | 2.57 | 2.13 | 2.34 | 0.36 |
| Transmittance at Thickness of 0.5 mm (light with wavelength of 550 nm) | 78.8% | 90.2% | 84.77% | 89.15% | 88.02% | 89.2% | 88.54% | 90.47% |
| Density (g/cm$^3$) | 2.5978 | 2.5652 | 2.5702 | 2.5708 | 2.568 | 2.588 | 2.566 | 2.5589 |
| Refractive Index | 1.5695 | 1.563 | 1.5645 | 1.566 | 1.5635 | 1.573 | 1.5682 | 1.5587 |
| Young's Modulus (GPa) | 104.754 | 103.685 | 105.524 | 105.754 | 105.940 | 115.674 | 114.875 | 103.654 |

Table 8

| Chemically Strengthened Microcrystalli ne Glass | D1 | D2 | D3 | D4 | D5 | D6 | D7 | D8 |
|---|---|---|---|---|---|---|---|---|
| Strengthening Temperature (°C) | 450 | 450 | 450 | 450 | 450 | 450 | 450 | 450 |
| Strengthening Duration (h) | 16.0 | 24.0 | 20.0 | 25.0 | 24.0 | 24.0 | 24.0 | 24.0 |
| Salt Bath Proportion | 29.99wt%NaNO$_3$+69.98wt%KNO$_3$+0.03wt%LiNO$_3$ | | | | | | | |
| \|CT_CV\| (MPa) | 129.08 | 106.85 | 124.65 | 96.84 | 108.95 | 144.68 | 158.47 | 128.44 |
| DOL_0 ($\mu$m) | 113.72 | 108.52 | 109.72 | 111.62 | 112.62 | 107.9 | 105.9 | 106.5 |
| \|CT_AV\| (MPa) | 85 | 74 | 82.6 | 69.9 | 74.6 | 95.67 | 103.5 | 80.6 |
| CT_LD (MPa/mm) | 46335. 20 | 41878. 08 | 46348. 51 | 38691. 05 | 40994. 19 | 54378. 83 | 59657. 40 | 46264. 40 |
| Vickers Hardness, | 712 | 704 | 696 | 708 | 715 | 706 | 718 | 712 |
| kgf/mm$^2$ | | | | | | | | |
| Borne Load/N with Deformation Amount of 0.40 mm | 24.2 | 24.6 | 27.4 | 26.7 | 26.8 | 37.4 | 34.9 | 23.5 |

(continued)

| Chemically Strengthened Microcrystalline Glass | D1 | D2 | D3 | D4 | D5 | D6 | D7 | D8 |
|---|---|---|---|---|---|---|---|---|
| Deformation Amount (mm) under Load of 10 kgf | 0.890 | 0.879 | 0.869 | 0.868 | 0.864 | 0.817 | 0.825 | 0.886 |

It can be seen from results of examples in Table 1-Table 4 and comparative examples in Table 5-Table 8 that, compared with the comparative examples, by using solutions of the examples of the present invention, when satisfying the specific oxide content relationships while satisfying the content ranges of various oxides, the prepared microcrystalline glass has excellent optical properties and a high Young's modulus, and the lithium disilicate crystalline phase is the primary crystalline phase of the microcrystalline glass. Moreover, the chemically strengthened microcrystalline glass manufactured using the microcrystalline glass in the examples of the present invention can obtain a high stress level and a high mechanical strength performance, and has significantly superior deformation resistance to that in the comparative examples. In addition, the base glass corresponding to the microcrystalline glass of the examples of the present invention has a relatively low upper limit temperature of crystal precipitation, indicating that it is suitable for industrial mass production. At the same time, the expansion softening point temperature of the microcrystalline glass of the examples of the present invention is suitable, indicating that it is suitable for 3D hot bending to form the 3D curved microcrystalline glass.

However, in solutions of Comparative Example 1-Comparative Example 8, glass formulations thereof failed to satisfy both the content ranges of various oxides and the specific oxide content relationships in the present invention, such that the prepared microcrystalline glass either had relatively poor optical properties, or failed to prepare chemically strengthened microcrystalline glass having relatively good deformation resistance.

By comparing FIG. 4 and FIG. 5, it can be seen that when the deformation amount of 0.40 mm occurred during extrusion at the center of the main surface of the chemically strengthened microcrystalline glass in Example 3 of the present invention, the load borne or offset was obviously larger than that in Comparative Example 3. It can be seen that the chemically strengthened microcrystalline glass of the present invention has more excellent deformation resistance.

Preferred embodiments of the present invention have been described in detail in the above, but the present invention is not limited thereto. Within the scope of technical concept of the present invention, many simple modifications can be made to the technical solutions of the present invention, including combining various technical features in any other suitable ways, and these simple modifications and combinations should also be regarded as contents disclosed in the present invention, and all fall within the scope of protection of the present invention.

**Industrial Applicability**

By enabling the microcrystalline glass containing the primary crystalline phase lithium disilicate to satisfy the specific oxide contents and specific oxide content relationships, the present invention ensures the microcrystalline glass to have high intrinsic strength and excellent optical properties, and ensures to prepare the chemically strengthened microcrystalline glass having a high stress level and excellent deformation resistance by chemically strengthening the microcrystalline glass.

**Claims**

1. A microcrystalline glass, **characterized in that** the microcrystalline glass comprises a lithium disilicate crystalline phase, wherein the lithium disilicate crystalline phase has a higher weight percentage than other crystalline phases present in the microcrystalline glass;
   in terms of molar percentage of oxides, a composition of the microcrystalline glass comprises:

   $SiO_2$: 55.00 mol%-65.00 mol%, $Al_2O_3$: 0.00 mol%-2.00 mol%, $P_2O_5$: 1.00 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and
   in terms of contents of various oxides represented by molar percentage in the composition of the microcrystalline glass, the composition of the microcrystalline glass satisfies: $2.00 \leq SiO_2 / Li_2O \leq 2.40$, optionally, $2.00 \leq SiO_2 / Li_2O \leq 2.30$, and further optionally, $2.02 \leq SiO_2 / Li_2O \leq 2.20$.

2. The microcrystalline glass according to claim 1, wherein in terms of the contents of the various oxides represented by molar percentage in the composition of the microcrystalline glass, the composition of the microcrystalline glass further satisfies:

   $0.90 \leq SiO_2 + Li_2O \leq 0.96$, optionally $0.90 \leq SiO_2 + Li_2O \leq 0.95$; and/or
   $Al_2O_3 / SiO_2 \leq 0.030$.

3. The microcrystalline glass according to claim 1 or 2, wherein in terms of the contents of the various oxides represented by molar percentage in the composition of the microcrystalline glass, the composition of the microcrystalline glass further satisfies: $0.31 \leq ZrO_2 / (CaO + ZrO_2 + Al_2O_3) \leq 1.50$, optionally, $0.32 \leq ZrO_2 / (CaO + ZrO_2 + Al_2O_3) \leq 1.20$, further optionally, $0.36 \leq ZrO_2 / (CaO + ZrO_2 + Al_2O_3) \leq 1.10$; and/or

   $0.10 \leq ZrO_2 / (100\% - 3 \times Li_2O) \leq 0.60$, optionally, $0.12 \leq ZrO_2 / (100\% - 3 \times Li_2O) \leq 0.52$, further optionally, $0.16 \leq ZrO_2 / (100\% - 3 \times Li_2O) \leq 0.50$; and/or
   $0.034 \leq ZrO_2 / SiO_2 \leq 0.100$, optionally, $0.035 \leq ZrO_2 / SiO_2 \leq 0.095$, further optionally, $0.055 \leq ZrO_2 / SiO_2 \leq 0.095$.

4. The microcrystalline glass according to any one of claims 1-3, wherein in terms of the contents of the various oxides represented by molar percentage in the composition of the microcrystalline glass, the composition of the microcrystalline glass further satisfies: $CaO + Al_2O_3 \leq 0.065$, optionally, $CaO + Al_2O_3 \leq 0.055$, further optionally, $CaO + Al_2O_3 \leq 0.050$; and/or
   $(CaO + Al_2O_3) / Li_2O \leq 0.25$, optionally, $(CaO + Al_2O_3) / Li_2O \leq 0.20$, further optionally, $(CaO + Al_2O_3) / Li_2O \leq 0.14$.

5. The microcrystalline glass according to any one of claims 1-4, wherein in terms of the contents of the various oxides represented by molar percentage in the composition of the microcrystalline glass, the composition of the microcrystalline glass further satisfies: $0.12 \leq (ZrO_2 - Na_2O) / (SiO_2 - 2 \times Li_2O) \leq 6.40$, optionally, $0.14 \leq (ZrO_2 - Na_2O) / (SiO_2 - 2 \times Li_2O) \leq 6.16$, further optionally, $0.50 \leq (ZrO_2 - Na_2O) / (SiO_2 - 2 \times Li_2O) \leq 3.00$; and/or
   $Na_2O / SiO_2 \leq 0.05$, optionally, $Na_2O / SiO_2 \leq 0.04$, further optionally, $Na_2O / SiO_2 \leq 0.02$.

6. The microcrystalline glass according to any one of claims 1-5, wherein in terms of molar percentage of the oxides, in the microcrystalline glass: a content of $SiO_2$ is 60.00 mol%-65.00 mol%, and optionally, the content of $SiO_2$ is 60.50 mol%-64.00 mol%; and/or

   a content of $Li_2O$ is 28.00 mol%-31.00 mol%, and optionally, the content of $Li_2O$ is 29.00 mol%-30.50 mol%; and/or
   a content of $ZrO_2$ is 3.20 mol%-6.00 mol%, and optionally, the content of $ZrO_2$ is 4.00 mol%-6.00 mol%; and/or
   a content of $P_2O_5$ is 1.50 mol%-3.00 mol%, and optionally, the content of $P_2O_5$ is 1.50 mol%-2.50 mol%; and/or
   a content of $Na_2O$ is 0.00 mol%-1.00 mol%, and optionally, the content of $Na_2O$ is 0.00 mol%-0.50 mol%; and/or
   a content of $CaO$ is 0.00 mol%-4.00 mol%, and optionally, the content of $CaO$ is 0.00 mol%-2.50 mol%.

7. The microcrystalline glass according to any one of claims 1-6, wherein in terms of molar percentage of the oxides, the composition of the microcrystalline glass further comprises: $Y_2O_3$: 0.00 mol%-1.00 mol%, $La_2O_3$: 0.00 mol%-1.00 mol%, and $Ta_2O_5$: 0.00 mol%-1.00 mol%.

8. The microcrystalline glass according to any one of claims 1-7, wherein in terms of molar percentage of the oxides, in the microcrystalline glass: a sum of contents of $Na_2O$ and $K_2O$ is smaller than 1.00 mol%.

9. The microcrystalline glass according to any one of claims 1-8, wherein a density $\rho$ of the microcrystalline glass is $\geq 2.50$ $g/cm^3$, and optionally, the density $\rho$ of the microcrystalline glass is 2.50 $g/cm^3$-2.75 $g/cm^3$; and/or a refractive index of the microcrystalline glass is $\leq 1.60$.

10. The microcrystalline glass according to any one of claims 1-9, wherein a crystallinity of the microcrystalline glass is 30.00 wt%-90.00 wt%, optionally, the crystallinity is 50.00 wt%-90.00 wt%, and further optionally, the crystallinity is 65.00 wt%-90.00 wt%; and/or
in the microcrystalline glass, an average crystal size is $\leq 100$ nm, optionally, the average crystal size is $\leq 50$ nm, and further optionally, the average crystal size is 15 nm-45 nm.

11. The microcrystalline glass according to any one of claims 1-10, wherein Young's modulus of the microcrystalline glass is $\geq$ 100.00 GPa, optionally, the Young's modulus of the microcrystalline glass is $\geq$ 110.00 GPa, and further optionally, the Young's modulus of the microcrystalline glass is 114 GPa-130 GPa.

12. The microcrystalline glass according to any one of claims 1-11, wherein at a thickness of 0.5 mm, b value of the microcrystalline glass is $\leq$ 1.0, and optionally, the b value is $\leq$ 0.8; and/or
the microcrystalline glass is transparent in a visible light range; at the thickness of 0.5 mm, for light with a wavelength of 550 nm, a transmittance of the microcrystalline glass is $\geq$ 85.00%, and optionally, the transmittance of the microcrystalline glass is $\geq$ 90.00%.

13. The microcrystalline glass according to any one of claims 1-12, wherein an expansion softening point of the microcrystalline glass is 750 °C-850 °C, and optionally, the expansion softening point of the microcrystalline glass is 750 °C-830 °C.

14. A chemically strengthened microcrystalline glass, **characterized in that** a composition at a center of the chemically strengthened microcrystalline glass is identical to that of the microcrystalline glass according to any one of claims 1-13, and the chemically strengthened microcrystalline glass comprises a compression stress layer region extending from a surface of the chemically strengthened microcrystalline glass to a compression depth, and has tensile stress in an interior of the chemically strengthened microcrystalline glass.

15. The chemically strengthened microcrystalline glass according to claim 14, wherein the chemically strengthened microcrystalline glass comprises a lithium disilicate crystalline phase, wherein the lithium disilicate crystalline phase has a higher weight percentage than other crystalline phases present in the chemically strengthened microcrystalline glass; in terms of molar percentage of the oxides, the composition at the center of the chemically strengthened microcrystalline glass comprises: $SiO_2$: 55.00 mol%-65.00 mol%, $Al_2O_3$: 0.00 mol%-2.00 mol%, $P_2O_5$: 1.00 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and
in terms of contents of the oxides expressed by molar percentage, the composition at the center of the chemically strengthened microcrystalline glass satisfies: $2.00 \leq SiO_2 / Li_2O \leq 2.40$, optionally, $2.00 \leq SiO_2 / Li_2O \leq 2.30$, and further optionally, $2.02 \leq SiO_2 / Li_2O \leq 2.20$.

16. The chemically strengthened microcrystalline glass according to claim 14 or 15, wherein in terms of contents of the oxides expressed by molar percentage, the composition at the center of the chemically strengthened microcrystalline glass further satisfies:

$0.90 \leq SiO_2 + Li_2O \leq 0.96$; and/or
$Al_2O_3 / SiO_2 \leq 0.030$; and/or
$0.31 \leq ZrO_2 / (CaO + ZrO_2 + Al_2O_3) \leq 1.50$; and/or
$0.10 \leq ZrO_2 / (100\% - 3 \times Li_2O) \leq 0.60$; and/or
$0.034 \leq ZrO_2 / SiO_2 \leq 0.100$; and/or
$CaO + Al_2O_3 \leq 0.065$; and/or
$(CaO + Al_2O_3) / Li_2O \leq 0.25$; and/or
$0.12 \leq (ZrO_2 - Na_2O) / (SiO_2 - 2 \times Li_2O) \leq 6.40$; and/or
$Na_2O / SiO_2 \leq 0.05$.

17. The chemically strengthened microcrystalline glass according to any one of claims 14-16, wherein in terms of molar percentage of the oxides, the composition at the center of the chemically strengthened microcrystalline glass comprises:

a content of $SiO_2$ being 60.00 mol%-65.00 mol%, and optionally, the content of $SiO_2$ being 60.50 mol%-64.00 mol%; and/or
a content of $Li_2O$ being 28.00 mol%-31.00 mol%, and optionally, the content of $Li_2O$ being 29.00 mol%-30.50 mol%; and/or
a content of $ZrO_2$ being 3.20 mol%-6.00 mol%, and optionally, the content of $ZrO_2$ being 4.00 mol%-6.00 mol%; and/or
a content of $P_2O_5$ being 1.50 mol%-3.00 mol%, and optionally, the content of $P_2O_5$ being 1.50 mol%-2.50 mol%; and/or

a content of $Na_2O$ being 0.00 mol%-1.00 mol%, and optionally, the content of $Na_2O$ being 0.00 mol%-0.50 mol%; and/or
a content of CaO being 0.00 mol%-4.00 mol%, and optionally, the content of CaO being 0.00 mol%-2.50 mol%.

18. The chemically strengthened microcrystalline glass according to any one of claims 14-17, wherein in terms of molar percentage of the oxides, the composition at the center of the chemically strengthened microcrystalline glass further comprises: $Y_2O_3$: 0.00 mol%-1.00 mol%, $La_2O_3$: 0.00 mol%-1.00 mol%, and $Ta_2O_5$: 0.00 mol%-1.00 mol%.

19. The chemically strengthened microcrystalline glass according to any one of claims 14-18, wherein the chemically strengthened microcrystalline glass has DOL_0 of 0.18 t-0.25 t, and optionally, the chemically strengthened microcrystalline glass has DOL_0 of 0.20 t-0.25 t, wherein t is thickness of the chemically strengthened microcrystalline glass.

20. The chemically strengthened microcrystalline glass according to any one of claims 14-19, wherein the chemically strengthened microcrystalline glass has |CT_AV| of 85 MPa-200 MPa, optionally, the chemically strengthened microcrystalline glass has |CT_AV| of 90 MPa-200 MPa, and further optionally, the chemically strengthened microcrystalline glass has |CT_AV| of 130 MPa-200 MPa, wherein |CT_AV| is an absolute value of average tensile stress.

21. The chemically strengthened microcrystalline glass according to any one of claims 14-20, wherein the chemically strengthened microcrystalline glass has CT_LD of 50,000 MPa/mm-100,000 MPa/mm, optionally, the chemically strengthened microcrystalline glass has CT_LD of 55,000 MPa/mm-100,000 MPa/mm; and further optionally, the chemically strengthened microcrystalline glass has CT_LD of 65,000 MPa/mm-100,000 MPa/mm, wherein CT_LD is tensile stress linear density.

22. The chemically strengthened microcrystalline glass according to any one of claims 14-21, wherein the chemically strengthened microcrystalline glass has |CT_CV| of 120 MPa-320 MPa, optionally, the chemically strengthened microcrystalline glass has |CT_CV| of 135 MPa-300 MPa, and further optionally, the chemically strengthened microcrystalline glass has |CT_CV| of 160 MPa-300 MPa.

23. The chemically strengthened microcrystalline glass according to any one of claims 14-22, wherein Vickers hardness of the chemically strengthened microcrystalline glass is greater than or equal to 680 $kgf/mm^2$, and optionally, the Vickers hardness of the chemically strengthened microcrystalline glass is 700 $kgf/mm^2$-800 $kgf/mm^2$.

24. The chemically strengthened microcrystalline glass according to any one of claims 14-23, wherein when a thickness of the chemically strengthened microcrystalline glass is 0.5 mm, a center of a main surface of the chemically strengthened microcrystalline glass is extruded by a round-head metal compression rod with a diameter of 10 mm, and when the center of the main surface of the chemically strengthened microcrystalline glass is extruded by a load of 10 kgf, a deformation amount of a loaded position of the chemically strengthened microcrystalline glass to a loading direction is ≤ 0.850 mm.

25. The chemically strengthened microcrystalline glass according to any one of claims 14-24, wherein when a thickness of the chemically strengthened microcrystalline glass is 0.5 mm, a center of a main surface of the chemically strengthened microcrystalline glass is extruded by a round-head metal compression rod with a diameter of 10 mm, and when the center of the main surface of the chemically strengthened microcrystalline glass has a deformation amount of 0.400 mm in a loading direction, a load borne by the center of the main surface of the chemically strengthened microcrystalline glass is ≥ 30 N.

26. A glass device, **characterized in that** the glass device comprises the microcrystalline glass according to any one of claims 1-13 or comprises the chemically strengthened microcrystalline glass according to any one of claims 14-25.

27. An electronic device, **characterized in that** the electronic device comprises the microcrystalline glass according to any one of claims 1-13 or comprises the chemically strengthened microcrystalline glass according to any one of claims 14-25.

**FIG. 1**

**FIG. 2**

**FIG. 3**

**FIG. 4**

FIG. 5

## INTERNATIONAL SEARCH REPORT

| International application No. |
| --- |
| **PCT/CN2025/074946** |

**A. CLASSIFICATION OF SUBJECT MATTER**

C03C 10/04(2006.01)i; C03C 21/00(2006.01)i

According to International Patent Classification (IPC) or to both national classification and IPC

**B. FIELDS SEARCHED**

Minimum documentation searched (classification system followed by classification symbols)

IPC:C03C

Documentation searched other than minimum documentation to the extent that such documents are included in the fields searched

Electronic data base consulted during the international search (name of data base and, where practicable, search terms used)

CNTXT, ENTXTC, VEN, WPABS, WPABSC, Web of Science, CNKI: 二硅酸锂, 微晶玻璃, 透明, 化学强化, 电子, 氧化锂, 氧化锆, Li2Si2O5, Li2O, ZrO2, Lithium disilicate, microcrystalline glass, transparent, chemically strengthened, electronic, lithium oxide, zirconia

**C. DOCUMENTS CONSIDERED TO BE RELEVANT**

| Category* | Citation of document, with indication, where appropriate, of the relevant passages | Relevant to claim No. |
| --- | --- | --- |
| PX | CN 118930055 A (CHONGQING AUREAVIA HI-TECH GLASS CO., LTD.) 12 November 2024 (2024-11-12)<br>claims 1-27 | 1-27 |
| X | CN 109476532 A (CORNING INC.) 15 March 2019 (2019-03-15)<br>description, paragraphs [0051], [0057], [0079], [0116]-[0118], [133], and [137] | 1-27 |
| X | CN 113195424 A (CORNING INC.) 30 July 2021 (2021-07-30)<br>description, paragraphs [0511]-[0538], and embodiment 2, and figures 67-69 | 1-27 |
| X | WO 2023032937 A1 (AGC INC.) 09 March 2023 (2023-03-09)<br>description, paragraphs [0090]-[0119], tables 1-2, and embodiment 9 | 1-27 |
| A | CN 107001120 A (CORNING INC.) 01 August 2017 (2017-08-01)<br>entire document | 1-27 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **27 March 2025** | **01 April 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2025/074946** |

| Patent document cited in search report | | | Publication date (day/month/year) | Patent family member(s) | | | Publication date (day/month/year) |
| --- | --- | --- | --- | --- | --- | --- | --- |
| CN | 118930055 | A | 12 November 2024 | None | | | |
| CN | 109476532 | A | 15 March 2019 | US | 2024051868 | A1 | 15 February 2024 |
| | | | | JP | 2019522620 | A | 15 August 2019 |
| | | | | JP | 7082578 | B2 | 08 June 2022 |
| | | | | US | 2019177210 | A1 | 13 June 2019 |
| | | | | WO | 2017223551 | A1 | 28 December 2017 |
| | | | | US | 2021179484 | A1 | 17 June 2021 |
| | | | | US | 11591256 | B2 | 28 February 2023 |
| | | | | WO | 2017223561 | A1 | 28 December 2017 |
| | | | | EP | 3475236 | A1 | 01 May 2019 |
| | | | | EP | 3475235 | A1 | 01 May 2019 |
| | | | | TW | 202330427 | A | 01 August 2023 |
| | | | | TWI | 816629 | B | 21 September 2023 |
| | | | | TW | 201815715 | A | 01 May 2018 |
| | | | | TWI | 808058 | B | 11 July 2023 |
| | | | | US | 2019256407 | A1 | 22 August 2019 |
| | | | | US | 2023167015 | A1 | 01 June 2023 |
| | | | | US | 11840476 | B2 | 12 December 2023 |
| | | | | KR | 20190022678 | A | 06 March 2019 |
| | | | | KR | 102513539 | B1 | 24 March 2023 |
| CN | 113195424 | A | 30 July 2021 | WO | 2020018393 | A1 | 23 January 2020 |
| | | | | KR | 20220014912 | A | 07 February 2022 |
| | | | | KR | 102618611 | B1 | 27 December 2023 |
| | | | | EP | 3823935 | A1 | 26 May 2021 |
| | | | | US | 2023242438 | A1 | 03 August 2023 |
| | | | | US | 12071364 | B2 | 27 August 2024 |
| | | | | KR | 20210081321 | A | 01 July 2021 |
| | | | | KR | 102356026 | B1 | 08 February 2022 |
| | | | | JP | 2021531229 | A | 18 November 2021 |
| | | | | JP | 7116243 | B2 | 09 August 2022 |
| | | | | AU | 2019308175 | A1 | 18 March 2021 |
| | | | | AU | 2019308175 | B2 | 28 July 2022 |
| | | | | CA | 3129655 | A1 | 23 January 2020 |
| | | | | CA | 3129655 | C | 03 January 2023 |
| | | | | US | 2020017398 | A1 | 16 January 2020 |
| | | | | US | 11014848 | B2 | 25 May 2021 |
| | | | | US | 2021238083 | A1 | 05 August 2021 |
| | | | | US | 11649187 | B2 | 16 May 2023 |
| WO | 2023032937 | A1 | 09 March 2023 | JPWO | 2023032937 | A1 | 09 March 2023 |
| | | | | KR | 20240052940 | A | 23 April 2024 |
| | | | | US | 2024150225 | A1 | 09 May 2024 |
| | | | | EP | 4397637 | A1 | 10 July 2024 |
| CN | 107001120 | A | 01 August 2017 | JP | 2021095334 | A | 24 June 2021 |
| | | | | JP | 7027594 | B2 | 01 March 2022 |
| | | | | KR | 20240006005 | A | 12 January 2024 |
| | | | | TW | 202334050 | A | 01 September 2023 |
| | | | | TWI | 861872 | B | 11 November 2024 |
| | | | | SMT | 202100011 | T1 | 15 March 2021 |
| | | | | US | 2021114919 | A1 | 22 April 2021 |
| | | | | US | 11319244 | B2 | 03 May 2022 |

Form PCT/ISA/210 (patent family annex) (July 2022)

## INTERNATIONAL SEARCH REPORT
### Information on patent family members

| International application No. |
|---|
| **PCT/CN2025/074946** |

| Patent document cited in search report | Publication date (day/month/year) | Patent family member(s) | | | Publication date (day/month/year) |
|---|---|---|---|---|---|
| | | JP | 2022059028 | A | 12 April 2022 |
| | | JP | 7325561 | B2 | 14 August 2023 |
| | | TW | 202037572 | A | 16 October 2020 |
| | | TWI | 765234 | B | 21 May 2022 |
| | | US | 2018186686 | A1 | 05 July 2018 |
| | | US | 10189741 | B2 | 29 January 2019 |
| | | JP | 2021095333 | A | 24 June 2021 |
| | | JP | 7282120 | B2 | 26 May 2023 |
| | | TW | 202003411 | A | 16 January 2020 |
| | | TWI | 682912 | B | 21 January 2020 |
| | | US | 2024239704 | A1 | 18 July 2024 |
| | | US | 12049423 | B1 | 30 July 2024 |
| | | KR | 20190128751 | A | 18 November 2019 |
| | | KR | 102076605 | B1 | 13 February 2020 |
| | | JP | 2020033262 | A | 05 March 2020 |
| | | JP | 6663533 | B2 | 11 March 2020 |
| | | TW | 202124317 | A | 01 July 2021 |
| | | TWI | 823053 | B | 21 November 2023 |
| | | EP | 3636610 | A1 | 15 April 2020 |
| | | WO | 2016057748 | A1 | 14 April 2016 |
| | | KR | 20210008444 | A | 21 January 2021 |
| | | KR | 102536351 | B1 | 26 May 2023 |
| | | TW | 202124316 | A | 01 July 2021 |
| | | TWI | 808375 | B | 11 July 2023 |
| | | US | 2023242437 | A1 | 03 August 2023 |
| | | US | 11952306 | B2 | 09 April 2024 |
| | | EP | 3805169 | A1 | 14 April 2021 |
| | | EP | 3204339 | A1 | 16 August 2017 |
| | | EP | 3204339 | B1 | 31 July 2019 |
| | | DK | 3572384 | T3 | 04 January 2021 |
| | | KR | 20210008445 | A | 21 January 2021 |
| | | KR | 102534831 | B1 | 26 May 2023 |
| | | US | 2020002221 | A1 | 02 January 2020 |
| | | US | 11168021 | B2 | 09 November 2021 |
| | | US | 2017144921 | A1 | 25 May 2017 |
| | | US | 9809488 | B2 | 07 November 2017 |
| | | US | 2021114920 | A1 | 22 April 2021 |
| | | US | 11634357 | B2 | 25 April 2023 |
| | | EP | 3831787 | A1 | 09 June 2021 |
| | | EP | 3572384 | A2 | 27 November 2019 |
| | | EP | 3572384 | A3 | 18 March 2020 |
| | | EP | 3572384 | B1 | 18 November 2020 |
| | | EP | 3831788 | A1 | 09 June 2021 |
| | | TW | 201623179 | A | 01 July 2016 |
| | | TWI | 678348 | B | 01 December 2019 |
| | | ES | 2840674 | T3 | 07 July 2021 |
| | | JP | 2024069631 | A | 21 May 2024 |
| | | KR | 20170060156 | A | 31 May 2017 |
| | | KR | 102106543 | B1 | 29 May 2020 |
| | | TW | 202124318 | A | 01 July 2021 |

Form PCT/ISA/210 (patent family annex) (July 2022)

## INTERNATIONAL SEARCH REPORT
### Information on patent family members

International application No.

**PCT/CN2025/074946**

| Patent document cited in search report | Publication date (day/month/year) | Patent family member(s) | | | Publication date (day/month/year) |
|---|---|---|---|---|---|
| | | TWI | 752809 | B | 11 January 2022 |
| | | JP | 2020090437 | A | 11 June 2020 |
| | | JP | 6942210 | B2 | 29 September 2021 |
| | | JP | 2020033261 | A | 05 March 2020 |
| | | JP | 6663532 | B2 | 11 March 2020 |
| | | KR | 20190128750 | A | 18 November 2019 |
| | | KR | 102066697 | B1 | 15 January 2020 |
| | | US | 2021101824 | A1 | 08 April 2021 |
| | | US | 11384010 | B2 | 12 July 2022 |
| | | US | 2020231491 | A1 | 23 July 2020 |
| | | US | 11148968 | B2 | 19 October 2021 |
| | | KR | 20200015837 | A | 12 February 2020 |
| | | KR | 102329726 | B1 | 23 November 2021 |
| | | JP | 2022173512 | A | 18 November 2022 |
| | | TW | 202124315 | A | 01 July 2021 |
| | | TWI | 817081 | B | 01 October 2023 |
| | | JP | 2021014403 | A | 12 February 2021 |
| | | JP | 7155225 | B2 | 18 October 2022 |
| | | KR | 20210008936 | A | 25 January 2021 |
| | | KR | 102620832 | B1 | 03 January 2024 |
| | | TW | 202003410 | A | 16 January 2020 |
| | | TWI | 682911 | B | 21 January 2020 |
| | | US | 2025042804 | A1 | 06 February 2025 |
| | | KR | 20200128453 | A | 12 November 2020 |
| | | KR | 102353905 | B1 | 20 January 2022 |
| | | JP | 2017530933 | A | 19 October 2017 |
| | | JP | 6675389 | B2 | 01 April 2020 |
| | | TW | 202334051 | A | 01 September 2023 |
| | | TWI | 861887 | B | 11 November 2024 |
| | | TW | 202219006 | A | 16 May 2022 |
| | | TWI | 803167 | B | 21 May 2023 |
| | | US | 12049424 | B1 | 30 July 2024 |
| | | US | 2024254033 | A1 | 01 August 2024 |
| | | US | 2019071348 | A1 | 07 March 2019 |
| | | US | 10427975 | B2 | 01 October 2019 |
| | | US | 2016102010 | A1 | 14 April 2016 |
| | | US | 10239780 | B2 | 26 March 2019 |
| | | JP | 2021100909 | A | 08 July 2021 |
| | | JP | 7083932 | B2 | 13 June 2022 |
| | | EP | 3686168 | A1 | 29 July 2020 |
| | | EP | 3831786 | A1 | 09 June 2021 |
| | | US | 12098090 | B1 | 24 September 2024 |
| | | US | 2024317637 | A1 | 26 September 2024 |
| | | US | 2021101825 | A1 | 08 April 2021 |
| | | US | 11174194 | B2 | 16 November 2021 |
| | | US | 2021002164 | A1 | 07 January 2021 |
| | | US | 11034610 | B2 | 15 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410156362